# EUROPÄISCHE PATENTANMELDUNG

(11) **EP 4 779 542 A1**
(43) Veröffentlichungstag der Anmeldung: **22.07.2026**
(21) Anmeldenummer: 25152947.5
(22) Anmeldetag: 20.01.2025
(51) Int. Cl.: G06Q 10/087, G06K 7/10

(54) **DETEKTION EINES UNZULÄSSIG HOHEN UMGEBUNGSPARAMETERS IN EINEM REGALLAGERSYSTEM MIT EINER VIELZAHL VON LAGERFÄCHERN MIT LAGERGUT**

(71) Anmelder: Siemens Schweiz AG, 8047 Zürich (CH)
(72) Erfinder: Konrad, Hilmar, 6340 Baar (CH)
(74) Vertreter: Siemens Patent Attorneys

(57) **Zusammenfassung**

Die Erfindung betrifft ein Verfahren zur Überwachung eines Umgebungsparameters, insbesondere der Umgebungstemperatur, in einem Regallagersystem (RL) mit einer Vielzahl von Lagerfächern (LF) zur Einlagerung von Lagergut (LG). Es wird ein elektrischer Leckwellenleiter (SK) wie ein Schlitzkabel entlang der Lagerfächer verlegt. Es werden passive Funketiketten (TAG) mit jeweils einem Sensor (TS, HS) zur Erfassung eines jeweiligen Umgebungsparameters in den Lagerfächern zur Überwachung von eingelagertem Lagergut angebracht. Es wird ein HF-Energieversorgungssignal (EV) in den Leckwellenleiter eingespeist, wobei ein Teil der eingespeisten Signalleistung in Form elektromagnetischer Feldenergie zum Lagergut hin abgestrahlt wird. Ein Teil der vom Leckwellenleiter abgestrahlten elektromagnetischen Feldenergie wird von den passiven Funketiketten empfangen und zur elektrischen Eigenversorgung bereitgestellt, um ein wiederholtes Senden von Messwerten (U; T, H) zu einem erfassten Umgebungsparameter und/oder um ein sofortiges Senden einer Warnmeldung (AL) bei Überschreiten eines Grenzwertes an eine Gefahrenmeldestelle (Z) zu ermöglichen. Die Erfindung betrifft zudem eine Überwachungsanlage (BMA) und eine geeignete Verwendung.

## Beschreibung

### Technisches Gebiet

Die Erfindung betrifft ein Verfahren zur Überwachung eines Umgebungsparameters in einem Regallagersystem, insbesondere einer Umgebungstemperatur, wobei das Regallagersystem eine Vielzahl von Lagerfächern zur möglichen Einlagerung von Lagergut umfasst.

Weiter betrifft die Erfindung eine Anlage zur Überwachung eines Umgebungsparameters in einem Regallagersystem, insbesondere einer Umgebungstemperatur, wobei das Regallagersystem eine Vielzahl von Lagerfächern zur möglichen Einlagerung von Lagergut umfasst.

Schliesslich betrifft die Erfindung eine Verwendung im Rahmen der Überwachung eines Umgebungsparameters, insbesondere einer Umgebungstemperatur, in einem Regallagersystem.

### Technischer Hintergrund

Regallagersysteme sind zur Einlagerung von Lagergut vorgesehen und entsprechend eingerichtet. Das Lagergut kann sich z.B. auf einer Europa-Palette, in einer Gitterbox, in Kisten oder im Falle von Schüttgut auch in Säcken befinden. Beim einzelnen Lagergut kann es sich z.B. um Kartons mit Elektronikartikeln, Kleidung oder Haushaltswaren handeln. Es kann sich beim Lagergut auch um Rohstoffe handeln oder um Materialien für die Produktion, wie Metall, Holz oder Kunststoff, oder auch um Endprodukte, die bereit für den Versand sind, wie Möbel, Maschinen oder Fahrzeuge. Weiter kann es sich beim Lagergut um Ersatzteile handeln wie um Komponenten und Teile für Maschinen und Fahrzeuge oder auch um Gefahrstoffe wie Chemikalien oder andere gefährliche Materialien wie z.B. Lithium-Ion-Batterien. Die Aufzählung ist exemplarisch und nicht abschliessend.

Häufig kommen automatisierte Regallagersysteme zum Einsatz. Diese umfassen eine Vielzahl von Regalzeilen, wie z.B. sechs bis 50 Regalzeilen, die ihrerseits aus einer Mehrzahl von horizontalen Ebenen und vertikalen Feldern bestehen. Ein solches Regallagersystem kann bis zu 50 Ebenen und mehr sowie bis zu 50 Felder und mehr umfassen. Das jeweilige Lagergut wird zumeist mittels eines automatisch gesteuerten Regalbediengeräts ein- und ausgelagert.

Bei modernen Regallagersystemen mit Gebäudehöhen von mehr als 20 Metern ist eine Brandbekämpfung mit traditioneller Sprinkleranlage kaum mehr möglich. Grund dafür ist der geringe Abstand zwischen den Regalzeilen sowie der Löschwirkbereich der Sprinkleranlage selbst. Entwickelt sich ein Brand im unteren oder im mittleren Regalhöhenbereich, so ist es häufig zu spät, um ein sich bis dahin entwickeltes grosses Feuer noch «von oben» kontrollieren zu können. Mit anderen Worten erreicht das Löschwasser der Sprinkleranlage das darunter liegende Feuer erst gar nicht oder viel zu spät. Somit breitet sich das Feuer aus, ohne dass die Feuerwehr aufgrund der geringen Regalzeilenabstände die Möglichkeit hat, mit Löschfahrzeugen in das Regallagersystem einzudringen. Eine frühzeitige Branddetektion ist somit unabdingbar für eine rechtzeitige Brandlöschung.

Für die Branddetektion wären allein für den Fall einer einzelnen Regalzeile mit 30 Ebenen und 50 Feldern bereits 1500 punktförmige Brand- bzw. Rauchmelder erforderlich, um gezielt jedes Lagerfach auf einen Brand hin zu überwachen. Weist ein gesamtes Regallagersystem eine Vielzahl solcher Regalzeilen auf, so sind mehrere zehntausend Lagerfächer zu überwachen. Die regelmässig erforderliche Wartung der Brandmelder ist in solchen Umgebungen jedoch sehr aufwändig und im laufenden Betrieb kaum umsetzbar.

Die bei einem Brand entstehenden Rauchgase und Rauchaerosole können z.B. mittels eines Ansaugrauchmelders (ASD) detektiert werden. Derartige Ansaugrauchmelder sind z.B. aus der WO 2008/138877 A1, aus der EP 1 634 261 A1, aus der EP 1 811 478 A1 sowie aus der DE 10 2021 204 398 A1 bekannt.

Aus der DE 10 2021 204 398 A1 ist eine Matrixanordnung von Ansaugrauchmeldern (ASD) oder von linienförmigen Wärmemeldern bekannt, um Übertemperaturen sowie deren Position im Bereich der Lagerfächer in einem Regallagersystem zu erfassen.

Weiter ist bekannt, Bluetooth-Funketiketten zur Temperaturüberwachung von Lagergut in den Lagerfächern eines Regallagersystems zu verwenden. Derartige Funketiketten können eine Batterie aufweisen und somit für eine längere Zeit, wie z.B. von mehreren Monaten, einen Temperaturwert in der Umgebung eines solchen batteriebetriebenen Funketiketts erfassen und per Bluetooth an ein Gateway übertragen. Typischerweise handelt es sich bei diesen Bluetooth-Funketiketten um sogenannte BLE-Funketiketten (BLE für Bluetooth Low Energy), die im Vergleich zu «klassischen» Bluetooth-Funketiketten erheblich weniger Strom benötigen.

Zur Weiterleitung der jeweils erfassten Temperaturmesswerte kann eine Vielzahl von Gateways in einem Regallagersystem verteilt angeordnet sein, wobei die Gateways untereinander ein funkgestütztes Meshnet, d.h. ein vermaschtes Funknetz, bilden und von dort aus die erfassten Temperaturwerte an eine übergeordnete Zentrale weiterleiten. Die Gateways können alternativ dazu eingerichtet sein, die jeweils erfassten Temperaturmesswerte über eine Mobilfunkdatenschnittstelle oder über eine WLAN-Datenschnittstelle in die «Cloud» zu übertragen. Eine übergeordnete Cloud-Service-Applikation kann dann die im ganzen Regallagersystem erfassten Temperaturmesswerte zusammentragen und überwachen.

Die Funketiketten können alternativ auch batterielos ausgebildet sein. In diesem Fall weisen diese einen integrierten Energy-Harvesting-Schaltkreis auf, um in der Umgebung vorhandene elektromagnetische Feldenergie, wie z.B. aus einem WLAN-Netz, zu empfangen und in elektrische Energie umzusetzen. Ein derartiges BLE-Funketikett ist z.B. von der Fa. Wiliot unter der Typbezeichnung Pixel erhältlich. Diese BLE-Funketiketten werden im Bereich eines Lagerfachs, an ein Behältnis für das Lagergut oder im Lagergut selbst angebracht. Die BLE-Funketiketten kommunizieren über verteilt angeordnete Bridges und über ein Gateway mit einer Cloud-Zentrale zur Weiterleitung der jeweils erfassten Temperaturwerte zusammen mit einer durch die Bridges und dem Gateway ermittelten Position der jeweiligen BLE-Funketiketten im Regallagersystem. Allerdings werden hierfür eine Vielzahl von Bridges benötigt.

### Zusammenfassung der Erfindung

Davon ausgehend ist eine Aufgabe der vorliegenden Erfindung, ein einfacheres Verfahren zur Überwachung eines Umgebungsparameters in einem Regallagersystem anzugeben.

Es ist eine weitere Aufgabe der Erfindung, eine einfachere Anlage zur Überwachung eines Umgebungsparameters in einem Regallagersystem anzugeben.

Schliesslich ist es eine Aufgabe der Erfindung, eine geeignete Verwendung eines elektrischen Leckwellenleiters anzugeben.

Die Aufgabe der Erfindung wird durch ein Verfahren zur Überwachung eines Umgebungsparameters in einem Regallagersystem, insbesondere zur Überwachung einer Umgebungstemperatur, gelöst. Das Regallagersystem umfasst eine Vielzahl von Lagerfächern zur möglichen Einlagerung von Lagergut. Es wird zumindest ein elektrischer Leckwellenleiter, insbesondere ein Schlitzkabel, entlang der Lagerfächer verlegt. Insbesondere wird der zumindest eine elektrische Leckwellenleiter innerhalb der Lagerfächer verlegt. Es wird in den Lagerfächern eine Vielzahl von passiven Funketiketten mit jeweils einem Sensor zur Erfassung eines jeweiligen Umgebungsparameters zur Überwachung von eingelagertem Lagergut angebracht. Weiter wird gemäss der Erfindung ein HF-Energieversorgungssignal oder ganz allgemein ein Energieversorgungssignal in den jeweiligen Leckwellenleiter eingespeist. HF steht dabei für «Hochfrequenz», das heisst für die vorliegende Erfindung für Frequenzen von mehr als 10 MHz, insbesondere von mehr als 100 MHz. Es wird ein Teil der eingespeisten Signalleistung (des HF-Energieversorgungssignals) in Form von elektromagnetischer Feldenergie zum Lagergut hin abgestrahlt. Schliesslich wird ein Teil der vom jeweiligen Leckwellenleiter abgestrahlten elektromagnetischen Feldenergie von den passiven Funketiketten empfangen und zur elektrischen Eigenversorgung bereitgestellt, um ein wiederholtes Senden von Messwerten zu einem jeweiligen erfassten Umgebungsparameterwert an eine Gefahrenmeldestelle zu ermöglichen bzw. sicherzustellen und/oder um ein sofortiges Senden einer Warnmeldung bei einer unzulässigen Abweichung eines erfassten Messwerts von einem jeweiligen Grenzwert an eine Gefahrenmeldestelle zu ermöglichen bzw. sicherzustellen. Die jeweiligen passiven Funketiketten sind dabei auf den Empfang der vom Leckwellenleiter abgestrahlten elektromagnetischen Feldenergie zur elektrischen Eigenversorgung der passiven Funketiketten abgestimmt bzw. daraufhin optimiert.

Die Aufgabe der Erfindung wird weiter mit einer Anlage zur Überwachung eines Umgebungsparameters in einem Regallagersystem, insbesondere zur Überwachung einer Umgebungstemperatur, gelöst. Das Regallagersystem umfasst eine Vielzahl von Lagerfächern zur möglichen Einlagerung von Lagergut. Die Überwachungsanlage umfasst zumindest einen entlang und insbesondere innerhalb der Lagerfächer verlegten elektrischen Leckwellenleiter, insbesondere ein Schlitzkabel. Weiter gemäss der Erfindung umfasst die Überwachungsanlage ein an den jeweiligen Leckwellenleiter angeschlossenes Sendegerät zum Einspeisen eines HF-Energieversorgungssignals. Der jeweilige Leckwellenleiter ist dabei zum verteilten Abstrahlen eines Teils der eingespeisten Signalleistung des HF-Energieversorgungssignals in Form von elektromagnetischer Feldenergie entlang des jeweiligen Leckwellenleiters ausgebildet. Es können mehrere Leckwellenleiter an ein gemeinsames Sendegerät angeschlossen sein, wobei das gemeinsame Sendegerät dazu eingerichtet ist, vorzugsweise jeweils ein HF-Energieversorgungssignals in den angeschlossenen Leckwellenleiter einzuspeisen. Die passiven Funketiketten umfassen jeweils einen Sensor zur Erfassung eines jeweiligen Umgebungsparameters, insbesondere zur Erfassung einer Umgebungstemperatur. Die passiven Funketiketten sind in den Lagerfächern zur Überwachung von dort eingelagertem Lagergut angebracht. Zudem umfassen die passiven Funketiketten gemäss der Erfindung jeweils eine Energy-Harvesting-Einheit zum Empfangen eines Teils der abgestrahlten elektromagnetischen Feldenergie für die elektrische Eigenversorgung, um ein wiederholtes Senden von Messwerten zu einem jeweiligen erfassten Umgebungsparameterwert, insbesondere einer Umgebungstemperatur, an eine Gefahrenmeldestelle zu ermöglichen bzw. sicherzustellen und/oder um ein sofortiges Senden einer Warnmeldung bei einer unzulässigen Abweichung eines erfassten Messwerts von einem jeweiligen Grenzwert an eine Gefahrenmeldestelle zu ermöglichen bzw. sicherzustellen. Die jeweilige Energy-Harvesting-Einheit ist dabei auf den Empfang der vom Leckwellenleiter abgestrahlten elektromagnetischen Feldenergie zur elektrischen Eigenversorgung der passiven Funketiketten abgestimmt bzw. daraufhin optimiert. Eine (übergeordnete) Gefahrenmeldestelle ist zum direkten oder mittelbaren Empfang der von der Vielzahl von passiven Funketiketten gesendeten Messwerte und/oder Warnmeldungen eingerichtet.

Schliesslich wird die Aufgabe der Erfindung durch die Verwendung von entlang eines elektrischen Leckwellenleiters, insbesondere entlang eines Schlitzkabels, abgestrahlter elektromagnetischer Feldenergie zur elektrischen Eigenversorgung einer Vielzahl von passiven Funketiketten gelöst. Der elektrische Leckwellenleiter ist entlang von Lagerfächern eines Regallagersystems verlegt. Insbesondere ist der elektrische Leckwellenleiter innerhalb und entlang der Lagerfächer verlegt. Die passiven Funketiketten sind in den Lagerfächern zur Überwachung zumindest eines Umgebungsparameters, insbesondere zur Überwachung der Umgebungstemperatur, von eingelagertem Lagergut angebracht. Weiter umfassen die passiven Funketiketten jeweils eine Energy-Harvesting-Einheit zum Empfangen eines Teils der abgestrahlten elektromagnetischen Feldenergie für die elektrische Eigenversorgung, um ein wiederholtes Senden von Messwerten zu einem jeweiligen erfassten Umgebungsparameterwert an eine Gefahrenmeldestelle zu ermöglichen bzw. sicherzustellen und/oder um ein sofortiges Senden einer Warnmeldung bei einer unzulässigen Abweichung eines erfassten Messwerts von einem jeweiligen Grenzwert an eine Gefahrenmeldestelle zu ermöglichen bzw. sicherzustellen. Mit «sofortiges Senden» ist im Rahmen der vorliegenden Erfindung das Senden einer Warnmeldung innerhalb von 10 Sekunden, vorzugsweise innerhalb von 5 Sekunden, gemeint.

Die jeweilige Energy-Harvesting-Einheit ist dabei zu einem optimierten Empfang der vom Leckwellenleiter abgestrahlten elektromagnetischen Feldenergie abgestimmt, d.h. frequenztechnisch darauf hin optimiert, möglichst viel elektromagnetische Feldenergie zu entnehmen und diese in elektrische Energie zur Eigenversorgung umzuwandeln.

Der grosse Vorteil der in der vorherigen Zusammenfassung beschriebenen Erfindung liegt darin, dass durch die Verwendung eines elektrischen Leckwellenleiters (Schlitzkabel), der entlang oder durch die Lagerfächer eines Regallagersystems verlegt ist, zuverlässig ausreichende elektrische Energie für die Eigenversorgung der sich in der Nähe davon befindlichen passiven Funketiketten bereitgestellt werden kann. Es wird ergänzend angemerkt, dass neben den passiven Funketiketten gemäss der Erfindung auch bekannte batteriegestützte Funketiketten im selben Regallagersystem eingesetzt werden können.

Dabei wird die elektromagnetische Feldenergie vorteilhaft genau dort bereitgestellt, wo sie auch benötigt wird, d.h. entlang und insbesondere innerhalb der Lagerfächer, sowie innerhalb eines auf die Lagerfächer räumlich begrenzten «schlauchförmigen» Bereichs um den jeweiligen Leckwellenleiter im Regallagersystems mit einer in diesem schlauchförmigen Bereich lokalen, vergleichsweise hohen elektrischen Feldstärke.

Dadurch kann vorteilhaft auf eine Vielzahl sonst erforderlicher dezentral verteilt angeordneter HF-Energieversorgungseinheiten wie Bridges zur Versorgung der passiven Funketiketten mit elektromagnetischer Feldenergie verzichtet werden.

Die Verlegung der Schlitzkabel als elektrische Leckwellenleiter gestaltet sich dabei besonders einfach und erfolgt ähnlich der eines Koaxialkabels. Die Leitungslänge für ein solches Schlitzkabel kann in einem Bereich von 25 m bis zu 400 m liegen und dabei vorteilhaft eine Vielzahl von passiven Funketiketten energetisch mit elektromagnetischer Feldenergie versorgen. Die passiven Funketiketten sind somit aufgrund der Versorgung mit hoher elektrischer Feldenergie in der Lage, zuverlässig, insbesondere zu jedem Zeitpunkt, einen Messwert auszusenden, falls dieser in unzulässiger Weise von einem Grenzwert abweicht. Alternativ oder zusätzlich kann damit sichergestellt werden, dass die passiven Funketiketten in der energetischen Lage sind, insbesondere zyklisch einen Messwert aussenden zu können, wie z.B. alle 10 Sekunden, alle 30 Sekunden oder jede Minute, und dies in Abhängigkeit der ständig zur Verfügung stehenden elektrischen Eigenleistung, die der empfangenen Feldenergie entnommen werden kann. Dadurch ist vorteilhaft eine frühzeitige Branddetektion sichergestellt.

Dabei sollte es zur Sicherstellung einer zuverlässigen Energieversorgung der passiven Funketiketten völlig ausreichend sein, wenn die entlang des Leckwellenleiters abgestrahlte, vom HF-Energieversorgungssignal stammende elektromagnetische Feldenergie in einem Abstand von 1 Meter vom Leckwellenleiter eine elektrische Leistungsdichte mit einem Mindestwert von 0.01 Watt/m², insbesondere mit einem Mindestwert 0,1 Watt/m² und vorzugsweise mit einem Mindestwert von 1 Watt/m² aufweist. Dabei gilt die Annahme, dass jedes in einem Lagerfach angeordnete passive Funketikett in einem maximalen Abstand von 1 m bis 2 m zum Leckwellenleiter angebracht ist und nicht durch metallische bzw. elektrisch leitende Gegenstände abdeckt ist.

Die erfindungsgemässe Überwachungsanlage kann auch als Brandmeldeanlage betrachtet werden, wenn eine Überwachung der Umgebungstemperatur in einem Regallagersystem vorrangig ist. Die (übergeordnete) Gefahrenmeldestelle kann in diesem Fall auch als Brandmeldezentrale betrachtet werden. Die Gefahrenmeldestelle kann dazu ausgebildet sein, auf Basis der empfangenen Messwerte zu einem jeweiligen Umgebungsparameter und auf Basis von deren zugeordneter Position im Regallagersystem, z.B. auf Basis der Lagerfachkennung, eine durchscheinende bzw. semitransparente 3D-Darstellung zu erstellen und auf einer Anzeige der Gefahrenmeldestelle auszugeben. Damit ist vorteilhaft eine Übersicht der zu der Umgebungstemperatur, im Regallagersystem möglich. So können z.B. zu hohe Umgebungstemperaturwerte rot eingefärbt sein, während dann unbedenkliche Umgebungstemperaturwerte blau eingefärbt sind. Dazwischenliegende Temperaturwerte können einem Farbverlauf entsprechend eingefärbt sein. Gleichfalls können empfangene Warnmeldungen, wie z.B. eine Übertemperaturwarnmeldung, hervorstechend in der 3D-Darstellung visualisiert werden, beispielsweise mittels eines blinkenden Temperaturwertes. Dadurch ist eine schnelle und ortsgenaue Alarmierung möglich. Analog können auch andere Umgebungsparameter, wie z.B. ein Feuchtigkeitswert, ein CO-Konzentrationswert oder CO₂-Konzentrationswert, in der 3D-Darstellung visualisiert werden.

Alternativ oder zusätzlich kann die zuvor beschriebene 3D-Darstellung auch auf einer Anzeige einer Leitstelle oder einer sogenannten Management Station visualisiert werden. Hierzu empfängt die Leitstelle bzw. die Management Station die zuvor beschriebenen Messwerte und/oder Warnmeldungen zu den Umgebungsparametern zusammen mit einer Positionsangabe basierend auf den jeweiligen Lagerfachkennungen.

Alternativ oder zusätzlich können die zuvor beschriebenen Messwerte und/oder Warnmeldungen zu den Umgebungsparametern zusammen mit einer Positionsangabe basierend auf den jeweiligen Lagerfachkennungen an eine Cloudinfrastruktur (Cloud) übertragen werden, d.h. in einen sogenannten Cloudspeicher. Eine geeignet programmierte Cloud-Service-Application (CSA) kann dann diese Messwerte und/oder Warnmeldungen graphisch aufbereiten und diese an ein mobiles Kommunikationsendgerät, wie z.B. an ein Smartphone oder an ein Tablet, übertragen. Dadurch kann eine erfasste Übertemperatur im Regallagersystem einem Benutzer des mobilen Kommunikationsendgeräts vorteilhaft sofort gemeldet werden. Die zuvor erläuterte 3D-Darstellung erlaubt es dem Benutzer vorteilhaft, sich einen schnellen Überblick über die Lage im Regallagersystem zu verschaffen und geeignete Gegenmassnahmen zu initiieren, wie z.B. Servicefachkräfte zum Entfernen von Lagergut zu alarmieren und gegebenenfalls vorsorglich die Feuerwehr zu informieren.

Weiter alternativ oder zusätzlich kann die Ausgabe auf den zuvor beschriebenen Anzeigen derart erfolgen, dass vom Benutzer auswählbare Schichten durch das Regallagersystem, wie z.B. Ansichten auf eine Regalzeile, Ansichten auf Regalebenen oder Ansichten auf Regalfelder visualisiert werden, wie z.B. als sogenannte Heatmap.

Das in die jeweiligen elektrischen Leckwellenleiter eingespeiste HF-Energieversorgungssignal wird in einem, zwei oder mehreren, vorzugsweise lizenzfreien Frequenzbändern übertragen, vorzugsweise in einem einzigen Frequenzband. Die Übertragung kann in einem u.a. für Bluetooth und WLAN vorgesehenen 2.4 GHz Frequenzband (2.3995 GHz bis 2.4845 GHz) mit 1 MHz breiten Kanälen für Bluetooth und mit 5 MHz breiten Kanälen für WLAN erfolgen. Die Übertragung kann in einem u.a. für WLAN vorgesehenen 5 GHz Frequenzband (5.150 GHz bis 5.350 GHz oder 5.470 GHz bis 5.725 GHz) mit 20 MHz breiten Kanälen erfolgen. Weiterhin kann die Übertragung in einem u.a. für WLAN vorgesehenen 6 GHz Frequenzband (5,925 GHz bis 6,425 GHz) mit 20 MHz breiten Kanälen erfolgen. Die Übertragung kann auch in einem u.a. für WLAN vorgesehenen 860 MHz Frequenzband (863 MHz bis 866 MHz) oder in einem für ISM-Anwendungen (ISM für Industrial, Scientific and Medical) vorgesehenen 433 MHz Frequenzband (433.05 MHz bis 434.79 MHz), in einem für ISM- und RFID-Anwendungen vorgesehenen 868 MHz-Frequenzband (868 MHz bis 870 MHz) gegebenenfalls mit Subbändern oder in einem für ISM-Anwendungen vorgesehenen 900 MHz Frequenzband (902 MHz bis 928 MHz (US) oder 915 MHz bis 921 MHz (EU)) gegebenenfalls mit Subbändern erfolgen.

Die Übertragung des eingespeisten HF-Energieversorgungssignals kann in einem, zwei oder in mehreren zugeordneten Kanälen je Frequenzband erfolgen, so dass verbleibende Kanäle für andere Zwecke und/oder für andere Funkteilnehmer zur Verfügung stehen.

Insbesondere ist der Leckwellenleiter bzw. das Schlitzkabel derart ausgestaltet bzw. ausgebildet, dass das für die Übertragung des HF-Energieversorgungssignals vorgesehene Frequenzband auf die frequenzmässig bevorzugte Abstrahlungscharakteristik des elektrischen Leckwellenleiters bzw. Schlitzkabels abgestimmt ist. Dadurch ist der Wirkungsgrad des zur Abstrahlung vorgesehenen HF-Energieversorgungssignals vorteilhaft maximiert.

Bei den betrachteten passiven Funketiketten handelt es sich vorzugsweise um passive BLE-Funketiketten, die auf einem Bluetooth-Low Energy-Standard basieren. Alternativ können die passiven Funketiketten Thread- oder ZigBee-Funketiketten sein. Weiter alternativ können die passiven Funketiketten passive WLAN-Funketiketten sein.

Mit «passiven Funketiketten» ist hier gemeint, dass diese über keine Batterie zur elektrischen Versorgung verfügen. Es handelt sich somit um batterielose Funketiketten. Die Funketiketten können auch als «Tag» bezeichnet werden, die zumindest eine eindeutige Kennung oder ID aufweisen, welche die Funketiketten beim Senden mit ausgeben oder über welche diese Funketiketten im Sinne einer Adressierung zum Senden angesprochen werden können. Alternativ oder zusätzlich zur eindeutigen Kennung oder ID kann das passive Funketikett auch eine programmierte eindeutige Lagerfachkennung innerhalb des Regellagersystems umfassen.

Die passiven Funketiketten sind vorzugsweise flächig im Sinne einer Chip- oder Scheckkarte oder einer grösseren Briefmarke ausgebildet. Dabei sind die elektrischen und elektronischen Bauteile sowie die Energy-Harvesting-Einheit auf einem flächigen Schaltungsträger, wie z.B. aus PET, appliziert. In der vorliegenden Anmeldung wird anstelle des deutschen Begriffs «Energieernteeinheit» der in der englischen Fachsprache geläufige Begriff «Energy-Harvester» bzw. Energy-Harvesting-Einheit verwendet. Die Abmessungen der betrachteten passiven Funketiketten liegen für die Länge und Breite des Schaltungsträgers jeweils in einem Bereich von 3 cm bis 15 cm. Die Dicke des Schaltungsträgers beträgt maximal 5 mm, vorzugsweise maximal 2 mm. Der Schaltungsträger ist zum Schutz gegen Umwelteinflüsse typischerweise beidseitig mit einer Kunststofffolie umgeben.

Die Energy-Harvesting-Einheiten können eine Rectenne aufweisen, die in der Fachsprache auch als Rectenna (aus dem Englischen von rectifying antenna, gleichrichtende Antenne) bezeichnet wird und die dazu eingerichtet ist, hochfrequente elektromagnetische Wellen zu empfangen und diese dann in eine Gleichspannung umzuwandeln. Im einfachsten Fall umfasst eine Rectenne einen Dipol, der auf einen Versorgungssender abgestimmt und ausgerichtet ist. Das hochfrequente Empfangssignal wird dann typischerweise mittels einer Schottky-Diode gleichgerichtet. Die Energiezwischenspeicherung erfolgt vorzugsweise mittels eines Kondensators. Leistungsfähigere Rectennen können als Patchantennen auf einem PCB-Substrat realisiert sein, wie z.B. als U-förmige PIFA-Schlitzantenne. Dabei bezeichnet PIFA (für Planar Inverted F-Shaped Antenna) eine planare umgekehrte F-förmige Antenne.

Derartige Rectennen sind z.B. aus der wissenschaftlichen Publikation von Mohsen Koohestani, Jérôme Tissier, Mohamed Latrach. A miniaturized printed rectenna for wireless RF energy harvesting around 2.45 GHz. AEÜ - International Journal of Electronics and Communications / Archiv für Elektronik und Übertragungstechnik, 2020, 127, pp.153478. 10.016/j.aeue.2020.153478. hal-02966554, oder aus der wissenschaftlichen Publikation von D. K. Naji, Abdul-Kareem A. A Mohammed. A Dual-Band U-Slot PIFA Antenna with Ground Slit for RFID Applications. Journal of Emerging Trends in Computing and Information Sciences, Vol. 4, No. 2 Februar 2013, ISSN 2079-8407, bekannt.

Bekannt sind auch Energy-Harvesting-Einheiten, die eine magnetische Antenne bzw. eine sogenannte Loopantenne aufweisen und häufig als Antennen-Inlay auf einem Trägermaterial wie PET oder auf einem Leiterplattensubstrat angeordnet sind. Eine derartige Energy-Harvesting-Einheit ist z.B. aus der US 2020/0380328 A1 bekannt.

Weiter können die passiven Funketiketten an einer Lagerfachwand angebracht sein, wie z.B. an der Rückwand, an der Decke, an einer Seitenwand oder an einer Strebe eines Lagerfachs. Alternativ oder zusätzlich können die passiven Funketiketten direkt an dem eingelagerten Lagergut, im Lagergut, wie z.B. im Schüttgut selbst oder zwischen mehreren eingelagerten Kartons, oder auf dem eingelagerten Lagergut angebracht sein. Es können nur ein oder mehrere passive Funketiketten je Lagerfach und/oder je eingelagertem Lagergut angebracht sein. Es können auch in Lagerfächern, die zum Einlagern von schwer entflammbaren oder unbrennbaren Materialien vorgesehen sind, keine passiven Funketiketten angebracht sein.

Elektrische Leckwellenleiter sind Wellenleiter für elektromagnetische Wellen, bei denen es erwünscht ist, dass elektrische Feldenergie in Form elektromagnetischer Wellen nicht nur an den Enden des Wellenleiters, sondern zu einem bestimmten Anteil auch auf der ganzen Länge des Leckwellenleiters eintreten und austreten kann. Vorzugsweise sind die elektrischen Leckwellenleiter sogenannte Schlitzkabel, die auch als Leckkabel, als Leckleitung oder auch als Strahlerkabel bezeichnet werden und als langgestreckte Antennen verwendet werden, zum Beispiel für Rundfunk-, Mobilfunk- oder WLAN-Signale. Typischerweise handelt es sich bei den Schlitzkabeln um Koaxialkabel mit kleinen Schlitzen oder Öffnungen im Aussenleiter (Schirm), durch die ein HF-Signal über die ganze Länge des Kabels abgestrahlt oder aufgenommen werden kann. Dadurch können insbesondere lange Innenbereiche gleichmässig und kostengünstig mit Funkdiensten versorgt werden. Ein elektrischer Leckwellenleiter, insbesondere ein Schlitzkabel, kann auch derart ausgebildet sein, dass dieser in Umfangsrichtung zur Längserstreckung des Leckwellenleiters gesehen an einer gleichen Umfangsrichtungsposition elektromagnetische Wellen austreten lässt. Ein derartiger Leckwellenleiter ist daher kein omnidirektionaler, sondern ein gerichteter Leckwellenleiter mit einer radialseitlich bevorzugten Abstrahl- und Empfangscharakteristik. Wird ein solcher elektrischer Leckwellenleiter derart entlang der Lagerfächer verlegt, dass die Hauptabstrahlung des HF-Energieversorgungssignals hin zum Lagergut erfolgt, so ist vorteilhaft eine bessere Versorgung der dort befindlichen passiven Funketiketten mit elektromagnetischer Feldenergie möglich oder es kann der Sendepegel des HF-Energieversorgungssignals reduziert werden.

Ein elektrischer Leckwellenleiter wird linienförmig in der jeweiligen Regalzeile verlegt, wie z.B. mäanderförmig, so dass alle überwachungsbedürftigen Lagerfächer ausreichend mit elektromagnetischer Feldenergie versorgt werden können. Es können auch mehrere elektrische Leckwellenleiter entlang oder durch die Lagerfächer hindurch verlegt werden. So kann beispielsweise nur ein Leckwellenleiter oder auch parallel dazu beabstandet ein weiterer Leckwellenleiter je Regalebene oder Regalfeld verlegt sein, wie z.B. ein erster Leckwellenleiter entlang der Lagerfachdecke und ein zweiter Leckwellenleiter parallel dazu entlang der Lagerfachrückwand. Das HF-Energieversorgungssignal kann an nur einem Leiterende, an beiden Leiterenden oder dazwischen, wie z.B. in der Leitermitte, eingespeist werden. Offene Leiterenden sind vorzugsweise mit einem ohmschen Wellenwiderstand abzuschliessen. Im Falle von mehreren Leckwellenleitern können diese gemeinsam an eine entsprechendes Sendegerät zum Einspeisen des HF-Energieversorgungssignal angeschlossen sein.

Bekannte elektrische Leckwellenleiter werden ausschliesslich zur Funkkommunikationsversorgung (unidirektional, bidirektional) in Gebäuden mit öffentlichem Publikumsverkehr zu Kommunikationszwecken verwendet, wie zum Beispiel in Einkaufszentren, Krankenhäusern oder Flughäfen, und nicht zur Energieversorgung der Funkteilnehmer. Ebenso stellen elektrische Leckwellenleiter die Funkkommunikationsversorgung in Eisenbahn- und Strassentunneln sowie in Zügen oder Flugzeugen sicher, um Fahrgästen die Nutzung der GSM-, UMTS-, LTE- und 5G-Dienste zu ermöglichen. Die Anmelderin selbst bietet zudem ein sogenanntes IWLAN (Industrial WLAN) an, welches auf einem elektrischen Leckwellenleiter mit der Typbezeichnung RCoax basiert. Dabei stehen im industriellen Umfeld Verfügbarkeit und garantierte Latenzzeiten für die Kommunikation im Vordergrund. IWLAN wird zudem z.B. bei People Movern, Riesenrädern, Offshore-Plattformen, Häfen oder in Hochregallagern eingesetzt.

Im letzteren Fall ermöglicht IWLAN eine sehr zuverlässige Kommunikation zwischen automatischen Regalbediengeräten und der übergeordneten Logistiksteuerzentrale.

Bei dem messtechnisch zu erfassenden Umgebungsparameter handelt es sich insbesondere um einen Umgebungstemperaturwert, da ein zu hoher Temperaturwert häufig zu einem Brand oder zu einer Schädigung des eingelagerten Lagerguts führen kann. Alternativ oder zusätzlich kann es sich bei dem messtechnisch zu erfassenden Umgebungsparameter um einen Luftfeuchtigkeitswert handeln. Ein zu hoher Luftfeuchtigkeitswert kann nachteilig die Schimmelbildung am Lagergut begünstigen, so dass befallenes Lagergut, wie z.B. Textilien, komplett wertlos werden. Weiter alternativ oder zusätzlich kann es sich bei dem messtechnisch zu erfassenden Umgebungsparameter um einen Gaskonzentrationswert wie z.B. eines Brandgases handeln. Das Brandgas weist dabei zumindest einen Anteil von Kohlenstoffdioxid und/oder Kohlenstoffmonoxid und/oder Wasserstoff und/oder Ammoniak und/oder Schwefelwasserstoff und/oder Stickstoffmonoxid auf. Ein zu hoher Gaskonzentrationswert ist häufig ein Vorbote eines sich anbahnenden Brandes, da Brandgase während eines Schwelbrandes entstehen, der dann nach einiger Zeit in einen offenen Brand übergehen kann.

### Ausgestaltungen der Erfindung

Nach einer besonders vorteilhaften Verfahrensvariante werden die von den passiven Funketiketten gesendeten Messwerte und/oder Warnmeldungen auf umgekehrtem Wege durch Einkopplung in den Leckwellenleiter an die Gefahrenmeldestelle weitergeleitet. Die (übergeordnete) Gefahrenmeldestelle ist direkt oder mittelbar an den Leckwellenleiter zum Empfangen der Messwerte und/oder Warnmeldungen angeschlossen.

Der elektrische Leckwellenleiter dient somit vorteilhaft zur elektrischen Versorgung der passiven Funketiketten sowie zur Kommunikation mit den passiven Funketiketten in den Lagerfächern.

Der grosse Vorteil liegt hier darin, dass im Vergleich zum Stand der Technik auf die Vielzahl von dezentral in einem Regallagersystem verteilt angeordneten Bridges zur Erfassung und Weiterleitung der von den passiven Funketiketten ausgesendeten Daten an ein Gateway sowie zur energetischen Versorgung der passiven Funketiketten mit elektromagnetischer Feldenergie verzichtet werden kann. Der zugehörige Installationsaufwand reduziert sich drastisch.

Dadurch dass sich die passiven Funketiketten in einem maximalen Abstand von 2 Metern, vorzugsweise von 1 Meter, zum Leckwellenleiter befinden, ist zudem vorteilhaft eine besonders störunempfindliche Kommunikation zwischen der Gefahrenmeldestelle und dem jeweiligen passiven Funketikett möglich.

Der Frequenzbereich der von den passiven Funketiketten abgestrahlten Funksignale mit den zu übertragenden erfassten Messwerten und/oder Warnmeldungen liegt vorzugsweise, nicht notwendigerweise, in einem vom Frequenzbereich des HF-Energieversorgungssignals verschiedenen Frequenzbereich. So kann das für die Übertragung des HF-Energieversorgungssignals vorgesehene Frequenzband im 433 MHz-Frequenzband liegen und das für die Funksignale der passiven Funketiketten im 2.4 GHz-Frequenzband oder umgekehrt.

Alternativ kann sowohl für das HF-Energieversorgungssignal als auch für die von den passiven Funketiketten abgestrahlten Funksignalen mit den zu übertragenden erfassten Messwerten und/oder Warnmeldungen dasselbe Frequenzband verwendet werden. In diesem Fall wechseln sich Ladephasen zur Energieversorgung der passiven Funketiketten zeitlich mit Datenübertragungsphasen für die Datenübertragung von den Funketiketten zur Gefahrenmeldestelle und auf umgekehrtem Wege ab.

Insbesondere wird ein HF-Kommunikationssignal bzw. ein Kommunikationssignal in den Leckwellenleiter eingespeist, von dem ein Teil der eingespeisten Signalleistung (des HF-Kommunikationssignals) in Form elektromagnetischer Feldenergie zum Lagergut hin abgestrahlt wird. Basierend auf dem HF-Kommunikationssignal wird ein jeweiliges passives Funketikett zum Senden eines Messwerts zu einem jeweiligen erfassten Umgebungsparameter aufgefordert. Es wird dann der jeweils als Funksignal gesendete Messwert auf umgekehrtem Wege in den Leckwellenleiter eingekoppelt und an die Gefahrenmeldestelle weitergeleitet. Mit dem HF-Kommunikationssignal kann eine Funketikettenadresse oder eine eindeutige Kennung, d.h. eine insbesondere einmalige Funketiketten-ID, zur Aufforderung zum Senden eines Messwerts übertragen werden. Zum Beispiel kann eine Funketikettenadresse eindeutig durch die Gefahrenmeldestelle an die passiven Funketiketten vergeben werden. Letztere speichern diese in einem vorzugsweise nichtflüchtigen Speicher ab. Alternativ kann mit dem HF-Kommunikationssignal ein sich wiederholendes Startsignal oder Start- und Taktsignal ausgegeben werden, auf dessen Basis die passiven Funketiketten ein geeignetes kollisionsfreies Sendezeitfenster zum Aussenden des jeweiligen Messwertes ermitteln, wie z.B. mittels eines internen Zählers und der dort hinterlegten eindeutigen Funketikettenadresse.

Auch hier liegt der Frequenzbereich der von den passiven Funketiketten abgestrahlten und in den elektrischen Leckwellenleiter eingekoppelten Funksignale vorzugsweise, aber nicht notwendigerweise, in einem vom Frequenzbereich des HF-Energieversorgungssignals verschiedenen Frequenzbereich. So kann das für die Übertragung des HF-Energieversorgungssignals vorgesehene Frequenzband im 433 MHz-Frequenzband liegen und das für die Funksignale der passiven Funketiketten im 2.4 GHz-Frequenzband oder umgekehrt. Der Frequenzbereich des von der Gefahrenmeldestelle in den elektrischen Leckwellenleiter eingespeiste und von dort als Funksignal ausgekoppelte HF-Kommunikationssignal kann in einem von den beiden zuvor genannten Frequenzbereich verschiedenen Frequenzbereich liegen. Vorzugsweise liegt der Frequenzbereich des von der Gefahrenmeldestelle in den elektrischen Leckwellenleiter eingespeiste und von dort als Funksignal ausgekoppelte HF-Kommunikationssignal im gleichen Frequenzbereich wie der Frequenzbereich der von den passiven Funketiketten ausgesandten Funksignale, wie z.B. im einem 2.4 GHz-Frequenzband.

Alternativ kann sowohl für das HF-Energieversorgungssignal als auch für das HF-Kommunikationssignal dasselbe Frequenzband verwendet werden, wobei sich wiederum Ladephasen zur Energieversorgung der passiven Funketiketten zeitlich mit Datenübertragungs- und/oder Kommunikationsphasen abwechseln.

Nach einer Verfahrensvariante werden die von den passiven Funketiketten gesendeten Messwerte und/oder Warnmeldungen über ein im Bereich des Regallagersystems angeordnetes Funknetzwerk, insbesondere über ein verteiltes Mesh-Funknetzwerk, direkt oder mittelbar an die Gefahrenmeldestelle weitergeleitet. Das Funknetzwerk kann hierzu eine Vielzahl im Regallagersystem verteilt angeordnete Zugangspunkte umfassen, welche dazu eingerichtet sind, die empfangenen Messwerte an die Gefahrenmeldestelle weiterzuleiten. Die Zugangspunkte können zudem dazu eingerichtet sein, z.B. mittels einer sogenannten AoA-Empfangswinkelmessung (AoA für Angle of Arrival) in Verbindung mit einer ToA-Laufzeitmessung (ToA für Time of Arrival) die Position eines sendenden passiven Funketiketts relativ zum Zugangspunkt zu ermitteln und diese an die Gefahrenmeldestelle weiterzuleiten. Alternativ können die Zugangspunkte dazu eingerichtet sein, im Verbund mittels einer Laufzeittriangulationsmessung die Position eines sendenden passiven Funketiketts zu ermitteln und diese an die Gefahrenmeldestelle weiterzuleiten.

Nach einer weiteren Verfahrensvariante werden die passiven Funketiketten auf drahtlosem Wege mit einer jeweiligen Lagerfachkennung versehen, vorzugsweise mittels eines mobilen Kommunikationsendgeräts, wie z.B. mittels eines Smartphones oder Tablets. Die jeweilige Lagerfachkennung kennzeichnet dabei ein Lagerfach, in dem das jeweilige passive Funketikett angebracht wird. Eine Lagerfachkennung kann z.B. eine Regalzeilennummer, eine Ebenennummer und eine Fachnummer in dieser Regalzeile umfassen. Für den Fall, dass eine Regalzeile von beiden Seiten her «bestückbar» sein sollte, kann die Ebenennummer z.B. dergestalt sein, dass sie alle Lagerfächer in dieser Regalebene eindeutig abbilden kann. Alternativ kann die Lagerfachkennung zusätzlich zur Ebenennummer eine Regalseitennummer umfassen, wie z.B. eine «0» für die Vorderseite und eine «1» für die Rückseite einer Regalseite. Weiter gemäss der Erfindung wird dann ein von einem jeweiligen passiven Funketikett zusammen mit dessen Lagerfachkennung gesendeter Messwert und/oder eine zusammen mit dessen Lagerfachkennung gesendete Warnmeldung zur (eindeutigen) Bestimmung der Position des Lagerfachs im Regallagersystem verwendet.

Bezüglich der erfindungsgemässen Überwachungsanlage ist gemäss einer Ausführungsform ein Empfangsgerät an dem elektrischen Leckwellenleiter zum Empfangen der von den passiven Funketiketten als Funksignale gesendeten und in den Leckwellenleiter eingekoppelten Messwerte und/oder Warnmeldungen angeschlossen. Das Empfangsgerät ist dabei dazu eingerichtet, die am Leckwellenleiter als HF-Signal bzw. Funksignale empfangenen Messwerte und/oder Warnmeldungen an die Gefahrenmeldestelle weiterzuleiten. Es können mehrere Leckwellenleiter an ein dazu eingerichtetes gemeinsames Empfangsgerät angeschlossen sein, welches die jeweils empfangenen HF-Signale in entsprechende digitale Signale umsetzt. Letztere können z.B. gemultiplext und dann seriell über eine IP-Datenverbindung an die Gefahrenmeldestelle weitergeleitet werden.

Nach einer Ausführungsform dazu ist der Leckwellenleiter an ein Sendegerät zum Einspeisen eines HF-Kommunikationssignals sowie zum verteilten Abstrahlen eines Teils der eingespeisten HF-Leistung des HF-Kommunikationssignals in Form elektromagnetischer Feldenergie entlang des Leckwellenleiters angeschlossen. Es können mehrere Leckwellenleiter an ein dazu eingerichtetes gemeinsames Sendegerät angeschlossen sein, welches dazu eingerichtet ist, jeweils ein HF-Kommunikationssignal in den angeschlossenen Leckwellenleiter einzuspeisen. Das gemeinsame Sendegerät kann ferner dazu eingerichtet sein, z.B. digitale Signale seriell über eine IP-Datenverbindung von der Gefahrenmeldestelle zu empfangen, diese zu demultiplexen und in ein entsprechendes HF-Kommunikationssignal zum Einspeisen in den jeweiligen angeschlossenen Leckwellenleiter umzusetzen. Weiter kann das gemeinsame Sendegerät dazu eingerichtet sein, die gedemultiplexten digitalen Signale nacheinander wiederholt, insbesondere zyklisch, in ein jeweiliges HF-Kommunikationssignal zum Einspeisen in den jeweiligen angeschlossenen Leckwellenleiter umzusetzen. Dadurch kann ein Übersprechen von sendenden passiven Funketiketten in weiter beabstandete elektrische Leckwellenleiter vorteilhaft reduziert werden. Es können ein zuvor beschriebenes gemeinsames Sendegerät und ein zuvor beschriebenes gemeinsames Empfangsgerät auch zu einem gemeinsamen Sende-/Empfangsgerät zusammengefasst sein.

Weiter gemäss der Erfindung sind die passiven Funketiketten dazu eingerichtet, basierend auf dem empfangenen HF-Kommunikationssignal im Sinne eines Aufforderungssignals, insbesondere basierend auf einer über das HF-Kommunikationssignal übertragenen Funketikettenadresse, die jeweils erfassten Messwerte und/oder Warnmeldungen zu senden.

Nach einer Ausführungsform weist die entlang des Leckwellenleiters abgestrahlte, vom HF-Energieversorgungssignal stammende elektromagnetische Feldenergie in einem (jeweils kürzesten) Abstand von 1 Meter vom Leckwellenleiter eine elektrische Leistungsdichte mit einem Mindestwert von 0.01 Watt/m², insbesondere mit einem Mindestwert 0,1 Watt/m² und vorzugsweise mit einem Mindestwert von 1 Watt/m² auf. Vor allem weist die elektrische Leistungsdichte der abgestrahlten elektromagnetischen Feldenergie im Abstand von 1 Meter vom Leckwellenleiter einen Maximalwert von 10 Watt/m² auf.

Einer weiteren Ausführungsform zufolge umfassen die passiven Funketiketten jeweils einen elektrischen Energiespeicher, insbesondere einen Kondensator, zur Pufferung der von der zumindest einen Energy-Harvesting-Einheit in elektrische Energie umgewandelten empfangenen elektromagnetischen Feldenergie. Ein passives Funketikett kann auch zwei orthogonal zueinander angeordnete Energy-Harvesting-Einheiten, insbesondere Rectennen aufweisen, deren Dipole orthogonal zueinander angeordnet sind. Durch die vektorielle Überlagerung ist vorteilhaft eine weniger genaue Ausrichtung der passiven Funketiketten auf den Leckwellenleiter erforderlich.

Gemäss einer weiteren Ausführungsform ist der Leckwellenleiter dazu ausgebildet, die Signalleistung, insbesondere die des HF-Energieversorgungssignals, gleichmässig über die gesamte Länge des Leckwellenleiters abzustrahlen. Die abgestrahlte elektromagnetische Feldenergie nimmt bei einem homogenen Leckwellenleiter degressiv mit dem Abstand vom Einspeisepunkt ab. Es kann aber ein in etwa gleichmässiges Abstrahlverhalten eines Leckwellenleiter erreicht werden, wenn die Dichte der Öffnungen oder Schlitze am Mantelumfang des Leckwellenleiters mit dem Abstand vom Einspeisepunkt in kompensierender Weise zunimmt. Dadurch wird jedem passiven Funketiketten im Längsbereich eines Leckwellenleiters bzw. Schlitzkabels vorteilhaft die gleiche elektromagnetische Feldenergie bereitgestellt. Gegebenenfalls unzulässig hohe Feldstärkepegel in der Nähe des Einspeisepunktes können vorteilhaft damit vermieden werden.

Nach einer weiteren Ausführungsform ist der elektrische Leckwellenleiter, insbesondere das Schlitzkabel, zur elektromagnetisch bevorzugten Abstrahlung in einem lizenzfreien Frequenzband ausgebildet, insbesondere in einem 2.4 GHz-Frequenzband, in einem 433 MHz-Frequenzband, in einem 860 MHz Frequenzband, in einem 900 MHz Frequenzband, in einem 5 GHz-Frequenzband oder in einem 6 GHz-Frequenzband.

Nach einer Ausführungsform dazu ist der Leckwellenleiter an ein Sendegerät zum Einspeisen eines HF-Kommunikationssignals sowie zum verteilten Abstrahlen eines Teils der eingespeisten HF-Leistung des HF-Kommunikationssignals in Form elektromagnetischer Feldenergie entlang des Leckwellenleiters angeschlossen. Es können mehrere Leckwellenleiter an ein dazu eingerichtetes gemeinsames Sendegerät angeschlossen sein, welches dazu eingerichtet ist, jeweils ein HF-Kommunikationssignal in den angeschlossenen Leckwellenleiter einzuspeisen. Das gemeinsame Sendegerät kann ferner dazu eingerichtet sein, z.B. digitale Signale seriell über eine IP-Datenverbindung von der Gefahrenmeldestelle zu empfangen, diese zu demultiplexen und in ein entsprechendes HF-Kommunikationssignal zum Einspeisen in den jeweiligen angeschlossenen Leckwellenleiter umzusetzen. Weiter kann das gemeinsame Sendegerät dazu eingerichtet sein, die gedemultiplexten digitalen Signale nacheinander wiederholt, insbesondere zyklisch, in ein jeweiliges HF-Kommunikationssignal zum Einspeisen in den jeweiligen angeschlossenen Leckwellenleiter umzusetzen. Dadurch kann ein Übersprechen von sendenden passiven Funketiketten in weiter beabstandete elektrische Leckwellenleiter vorteilhaft reduziert werden. Es können ein zuvor beschriebenes gemeinsames Sendegerät und zuvor beschriebenes gemeinsame Empfangsgerät auch zu einem gemeinsamen Sende-/Empfangsgerät zusammengefasst sein.

Nach einer weiteren vorteilhaften Ausführungsform kann ein Sende-/Empfangsgerät, an dem zumindest ein elektrischer Leckwellenleiter angeschlossen ist, dazu eingerichtet sein, zusätzlich zu dem HF-Energieversorgungssignal oder zusätzlich zu dem HF-Energieversorgungssignal und HF-Kommunikationssignal ein HF-WLAN-Signal und/oder ein HF-Signal eines Mobilfunknetzes, wie z.B. eines GSM-, LTE- oder 5G-Mobilfunknetzes, in den zumindest einen elektrischen Leckwellenleiter einzuspeisen und auf umgekehrtem Wege auszukoppeln. Das Sende-/Empfangsgerät ist dabei über eine Busleitung, wie z.B. über ein LAN-Kabel, mit einem Telekommunikations-Netzknoten verbunden. Alternativ oder zusätzlich kann das Sende-/Empfangsgerät mit einem funkgestützten Gateway zur datentechnischen Verbindung mit einem Telekommunikations-Netzknoten verbunden sein oder ein derartiges Gateway aufweisen. Dadurch ist über den zumindest einen elektrischen Leckwellenleiter neben der Überwachung eines Umgebungsparameters in einem Regallagersystem vorteilhaft zusätzlich eine kommunikative Anbindung von Funkteilnehmern wie mobilen Kommunikationsendgeräten (Smartphone, Tablets oder Notebooks) an einen Telekommunikation-Netzknoten möglich. Mit anderen Worten ist es mit den zuvor genannten Funkteilnehmern möglich, zu telefonieren oder Internetzugang zu erhalten.

Alternativ oder zusätzlich ist auf diesem Weg eine zuverlässige Kommunikation zwischen automatischen Regalbediengeräten, die jeweils über ein entsprechendes Funkkommunikationsmodul verfügen, und einer übergeordneten Logistiksteuerzentrale, die z.B. an das Sende-/Empfangsgerät oder an einen Telekommunikation-Netzknoten angeschlossen ist, im Sinne des eingangs beschriebenen IWLANs (Industrial WLAN) möglich.

### Exemplarische Ausführungsbeispiele der Zeichnung

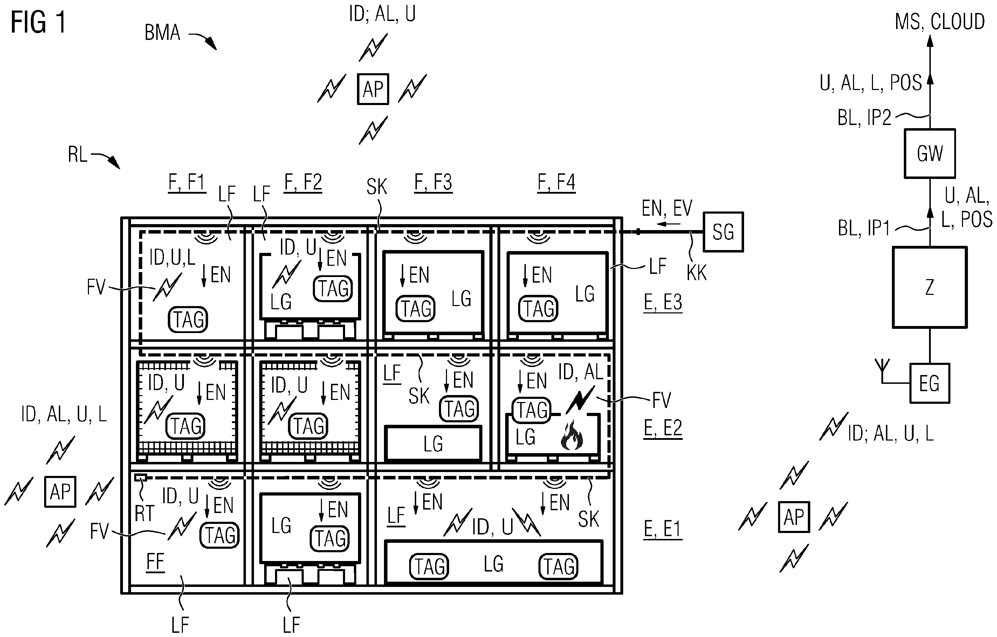

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und die in der Beschreibung erwähnten Merkmale jeweils einzeln für sich oder in beliebiger Kombination erfindungswesentlich sein. Elemente mit gleicher Funktion und Wirkungsweise sind in den Figuren 1 bis 11 jeweils mit denselben Bezugszeichen versehen. Es zeigen schematisch:
- FIG 1: schematisch ein Bespiel einer erfindungsgemässen Überwachungsanlage für ein Regallagersystem mit einem dort mäanderförmig verlegten elektrischen Leckwellenleiter zur ausschliesslichen elektrischen Energieversorgung von passiven Funketiketten,
- FIG 2: ein in der Nähe eines Leckwellenleiters zur elektrischen Energieversorgung angeordnetes beispielhaftes passives Funketikett gemäss der Erfindung,
- FIG 3: den schematischen Aufbau eines beispielhaften passiven Funketiketts mit zwei orthogonal zueinander angeordneten Energy-Harvesting-Einheiten (Rectennen) gemäss der Erfindung,
- FIG 4: den schematischen Aufbau eines beispielhaften passiven Funketiketts mit einer Funksende-/Empfangseinheit mit integrierter Energy-Harvesting-Einheit gemäss der Erfindung,
- FIG 5: den schematischen Aufbau eines beispielhaften passiven Funketiketts mit einer eine magnetische Antenne umfassenden Energy-Harvesting-Einheit gemäss der Erfindung,
- FIG 6: den schematischen Aufbau eines beispielhaften passiven Funketiketts mit integrierter Energy-Harvesting-Einheit mit drei angeschlossenen Patch-Antennen gemäss der Erfindung,
- FIG 7: schematisch eine beispielhaft parallele Anordnung von elektrischen Leckwellenleitern mit gleichmässigem Abstrahlverhalten in einem Regallagersystem und mit einem gemeinsamen Sende-/Empfangsgerät gemäss der Erfindung,
- FIG 8: schematisch ein Beispiel für einen elektrischen Leckwellenleiter in einem Regallagersystem mit mittiger Einspeisung eines HF-Energieversorgungs- und Kommunikationssignals über ein angeschlossenes Sende-/Empfangsgerät gemäss der Erfindung,
- FIG 9: schematisch ein Beispiel einer antiparallelen Anordnung von zwei elektrischen Leckwellenleitern, angeschlossen an ein gemeinsames Sende-/Empfangsgerät gemäss der Erfindung,
- FIG 10: schematisch ein zweites Beispiel einer Überwachungsanlage mit einem Leckwellenleiter zur elektrischen Energieversorgung sowie zur Kommunikation von passiven Funketiketten mit einer Gefahrenmeldestelle gemäss der Erfindung, und
- FIG 11: schematisch ein drittes Beispiel einer Überwachungsanlage mit im Regallagersystem parallel verlegten, jeweils an ein Sende-/Empfangsgerät angeschlossenen Leckwellenleitern gemäss der Erfindung.

### Detaillierte Beschreibung der Ausführungsbeispiele

FIG 1 zeigt schematisch ein Beispiel einer erfindungsgemässen Überwachungsanlage BMA für ein Regallagersystem RL mit einem dort mäanderförmig verlegten elektrischen Leckwellenleiter SK zur ausschliesslichen elektrischen Energieversorgung von passiven Funketiketten TAG. Im vorliegenden Beispiel ist aus Gründen der Übersichtlichkeit nur eine Regalzeile des gezeigten Regallagersystems RL dargestellt. Letzteres kann auch als Hochregallager bezeichnet werden.

Es ist in der gezeigten Regalzeile des Regallagersystems RL unterschiedliches Lagergut LG in dafür vorgesehenen Lagerfächern LF bzw. Lagerplätzen eingelagert. Die gezeigte Regalzeile umfasst beispielhaft drei Regalebenen E, E1-E3 sowie vier Regalfelder F, F1-F4 mit insgesamt 3 x 4 - 1 = 11 Lagerfächern LF, wobei zwei Lagerfächer LF in der untersten Regalebene E1 und in den Regalfeldern F3, F4 beispielhaft zu einem grösseren Lagerfach LF zusammengefasst sind. Zugehörige Regalböden, Regaldecken, Teile des Regalgestells sowie gegebenenfalls vorhandene Regalseitenwände und Regalrückwände sind nicht weiter bezeichnet.

Im Beispiel der FIG 1 ist gemäss der Erfindung ein einzelnes, gestrichelt dargestelltes Schlitzkabel als elektrischer Leckwellenleiter SK mäanderförmig durch alle, d.h. entlang der Lagerfächer LF verlegt. Dadurch reduziert sich der Montage- und Leitungsverlegeaufwand insbesondere bei kleineren Regallagersystemen RL. Der Leckwellenleiter SK ist mit dem einen Leiterende an ein Sendegerät SG zum Einspeisen eines HF-Energieversorgungssignals HF angeschlossen, wobei ein Teil der eingespeisten Signalleistung in Form elektromagnetischer Feldenergie EN entlang des Leckwellenleiters SK verteilt abgestrahlt wird, symbolisiert durch Funkwellensymbole. Das andere gegenüberliegende Ende ist mit einem (Wellen-)Widerstand RT abgeschlossen. In den gezeigten Lagerfächern LF ist zumindest ein passives Funketikett TAG angeordnet. Nicht für die Benutzung vorgesehene Lagerfächer LF oder leere Lagerfächer FF können mit einem passiven Funketikett TAG versehen werden, müssen es aber nicht. Der gezeigte Leckwellenleiter SK ist vorzugsweise ein Koaxialkabel, dessen radial aussenliegender rohrförmiger Aussenleiter mit kleinen Öffnungen oder Schlitzen zum möglichen Austreten von Funkwellen versehen ist. Der Aussenleiter ist typischerweise mit einem Schutzmantel aus Kunststoff versehen. Ein zwischen dem Sendegerät SG und einem nicht weiter bezeichneten Kupplungsstück nahe der Regalzeile verlaufendes Leitungsstück KK kann ein herkömmliches, nicht zur Abstrahlung ausgebildetes Koaxialkabel sein, da sich entlang des Leitungsstücks KK keine energetisch zu versorgenden Lagerfächer LF befinden. Dieses Leitungsstück KK kann somit als Zuleitung des Leckwellenleiters SK betrachtet werden.

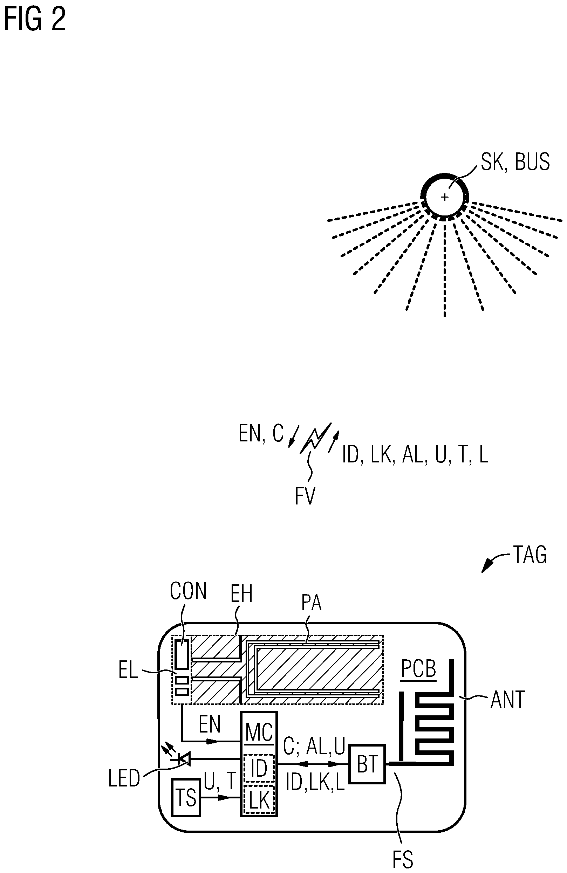

Weiter gemäss der Erfindung umfassen die passiven Funketiketten TAG jeweils einen Sensor zur Erfassung eines jeweiligen Umgebungsparameters. Mit U ist ein zugehöriger, vom jeweiligen passiven Funketikett TAG erfasster Messwert zu einem Umgebungsparameter bezeichnet. Ein solcher Messwert U ist ein Umgebungstemperaturmesswert T (siehe nachfolgende FIG 2). Die gezeigten passiven Funketiketten TAG sind in oder an den Lagerfächern LF zur Überwachung von dort eingelagertem Lagergut LG angebracht. Weiter umfassen die passiven Funketiketten TAG jeweils eine Energy-Harvesting-Einheit zum Empfangen eines Teils der abgestrahlten elektromagnetischen Feldenergie EN für die elektrische Eigenversorgung. In der nachfolgenden FIG 2 ist ein Beispiel für eine solche Energy-Harvesting-Einheit dargestellt. Damit wird ein wiederholtes Senden von Messwerten U zu einem jeweiligen erfassten Umgebungsparameterwert und/oder ein sofortiges Senden einer Warnmeldung AL bei einer unzulässigen Abweichung eines erfassten Messwerts U von einem jeweiligen Grenzwert ermöglicht.

Im Beispiel der vorliegenden FIG 1 sendet das im Lagerfach LF in der mittleren Regalebene E2 und im rechten Regalfeld F4 angeordnete passive Funketikett TAG eine Warnmeldung AL aus, da hier eine unzulässig hohe Umgebungstemperatur detektiert worden ist, symbolisiert durch ein Flammensymbol für ein vorliegendes Brandereignis. Die betrachteten passiven Funketiketten TAG sind bereits dazu eingerichtet, mit dem Aussenden eines Messwertes U oder mit Aussenden einer Warnmeldung AL eine eindeutige Kennung ID mit auszugeben, so dass eine Zuordnung der gesendeten Messwerte U und Warnmeldungen AL zu einem Lagerfach LF möglich ist, wie z.B. basierend auf einer elektronischen Tabelle, in der die eindeutige Kennung ID der jeweiligen passiven Funketiketten TAG einem zugehörigen Lagerfach LF zugeordnet ist. Weiter sind die passiven Funketiketten TAG bereits dazu eingerichtet, einen Wert für die elektrische Empfangsleistung L mit auszugeben, wie z.B. einen Wert im Bereich von 10% bis 100%, wobei 10% eine minimale und 100% eine maximale Empfangsleistung beschreibt. So können bei einem beispielhaften Wert von weniger als 30% Massnahmen getroffen werden, das betreffende passive Funketikett TAG neu im Lagerfach LF auszurichten oder zu platzieren, um damit eine höhere Empfangsleistung L für einen zuverlässigeren Betrieb sicherzustellen.

Im rechten Teil der FIG 1 ist eine Gefahrenmeldestelle Z dargestellt, die zum direkten oder mittelbaren Empfang der von der Vielzahl von passiven Funketiketten TAG gesendeten Messwerte U und/oder Warnmeldungen AL eingerichtet ist. Letztere werden über ein im Bereich des Regallagersystems RL angeordnetes Funknetzwerk, wie hier über ein verteiltes Mesh-Funknetzwerk mit mehreren drahtlosen Zugangspunkten AP, an die Gefahrenmeldestelle Z weitergeleitet. Mit FV ist dabei eine jeweilige Funkverbindung zwischen einem passiven Funketikett TAG und einem solchen drahtlosen Zugangspunkt AP, symbolisiert durch einen Blitz, bezeichnet. Zum Empfang ist die Gefahrenmeldestelle Z an ein entsprechend eingerichtetes drahtloses Empfangsgerät EG angeschlossen. Die Gefahrenmeldestelle Z ist beispielhaft über eine IP-Datenverbindung IP1 mit einem Gateway GW verbunden, welches seinerseits über eine kabelgebundene IP-Datenverbindung IP2 mit einer übergeordneten Leitstelle MS und/oder mit einer Cloudinfrastruktur CLOUD verbunden ist. Die von der Gefahrenmeldestelle Z erfassten Messwerte U und Warnmeldungen AL können in entsprechender Form dann aufbereitet und zusammen mit einer Positionsangabe POS an die Leitstelle MS oder an die Cloudinfrastruktur (CLOUD) weitergeleitet werden. Die Gefahrenmeldestelle Z ist vorzugsweise dazu ausgebildet, bei einer erfassten Warnmeldung AL einen akustischen und/oder optischen Alarm an der Gefahrenmeldestelle Z auszugeben.

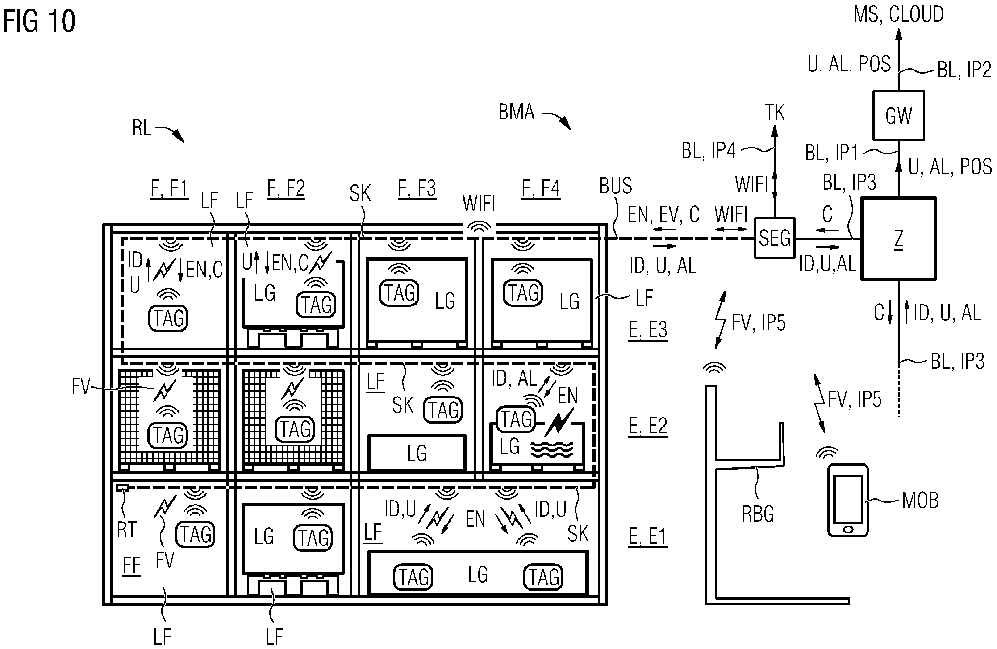

FIG 2 zeigt ein in der Nähe eines Leckwellenleiters SK zur elektrischen Energieversorgung angeordnetes beispielhaftes passives Funketikett TAG gemäss der Erfindung. Der elektrische Leckwellenleiter SK bildet zugleich eine Busleitung BUS analog zu einem drahtlosen Netzwerk mit einem entsprechenden Busmaster. Letzterer kann z.B. in einem angeschlossenen Sende-/Empfangsgerät SEG, wie in FIG 10 gezeigt, oder über ein Sende-/Empfangsgerät SEG in der Gefahrenmeldestelle Z selbst zur Koordinierung des Busverkehrs angeordnet sein. Zur Koordinierung der Buskommunikation kann das Sende-/Empfangsgerät SEG über die Gefahrenmeldestelle Z dazu eingerichtet sein, ein entsprechendes HF-Kommunikationssignal C zusätzlich zum HF-Energieversorgungssignal HF in den Leckwellenleiter SK einzuspeisen, wie z.B. ein Adressierungssignal, um gezielt ein passives Funketikett TAG zum Senden eines Umgebungsparametermesswertes aufzufordern.

Das gezeigte passive Funketikett TAG umfasst einen flächigen Träger PCB, wie z.B. einen flexiblen Schaltungsträger, mit einer darauf angeordneten Energy-Harvesting-Einheit EH mit einer Patchantenne PA, einen Mikrocontroller MC, eine (Bluetooth-)Funkschnittstelle mit einer Antenne ANT und einem (Bluetooth-)Kommunikationschip BT, sowie eine optische Anzeige LED in Form einer Leuchtdiode. Die zuvor genannten Komponenten EH, BT, TS, LED sind alle signal- und/oder datentechnisch mit dem Mikrocontroller MC verbunden.

Die gezeigte, als Rectenne ausgeführte Energy-Harvesting-Einheit EH ist zum Empfang von Feldenergie in einem Frequenzband um 2.45 GHz ausgebildet. Hier zu umfasst die Rectenne EH eine U-förmige Dipol-Patchantenne PA mit Masseschlitzen, d.h. eine PIF-Antenne (PIFA für Planar Inverted F-Shaped Antenne) sowie elektrische und elektronische Komponenten EL zur elektrischen Anpassung an die Antenne und zum Gleichrichten der empfangenen elektrischen Feldenergie sowie einen Kondensator CON zur Pufferung der gleichgerichteten elektrischen Spannung. Die im Kondensator CON gespeicherte elektrische Energie EN wird den oben genannten Komponenten BT, TS, LED zur elektrischen Stromversorgung bereitgestellt.

Der Mikrocontroller MC, d.h. eine prozessorgestützte elektronische Steuereinheit, ist dazu eingerichtet, vom angeschlossenen Temperatursensor TS einen Umgebungstemperaturmesswert T, U zu empfangen bzw. abzufragen, wenn genügend elektrisch Energie EN im Kondensator CON gespeichert ist, wie z.B. mit einer zuvor eingestellten Wiederholungsrate von 10, 20 oder 30 Sekunden. Der Mikrocontroller MC ist dazu eingerichtet bzw. programmiert, den empfangenen Umgebungstemperaturwert T an die (Bluetooth-)Funkschnittstelle BT zum Aussenden über eine Funkverbindung FV an den im oberen Teil der FIG 2 gezeigten elektrischen Leckwellenleiter SK auszugeben, gegebenenfalls erst auf eine Aufforderung durch die Gefahrenmeldezentrale Z hin. Im vorliegenden Fall ist der Mikrocontroller MC bereits dazu programmiert, eine im Mikrocontroller MC in einem nichtflüchtigen Speicher hinterlegte Lagerfachkennung LK, eine eindeutige Kennung ID im Sinne eines Identifizierungscodes sowie einen ermittelten Empfangsleistungswert L beim Senden mit auszugeben. Letztere kann z.B. aus der am Kondensator CON anliegenden elektrischen Spannung abgeleitet werden. Zugleich kann der Mikrocontroller MC dazu programmiert sein, die Leuchtdiode LED leuchtend anzusteuern, wie z.B. dauerleuchtend, falls das passive Funketikett TAG am Ort der Anbringung im Lagerfach LF genügend elektrische Feldenergie EN «ernten» kann. Alternativ kann ein Blinken anzeigen, dass genügend elektrische Energie EN stetig empfangen werden kann oder dass die empfangene elektrische Energie EN kritisch ist, d.h. für einen zuverlässigen Betrieb zu gering ist.

Der Mikrocontroller MC kann auch dazu eingerichtet oder programmiert sein, einen empfangenen Umgebungstemperaturmesswert T mit einem hinterlegten Grenzwert, wie z.B. von 40°C, zu vergleichen und im Fall einer unzulässigen Überschreitung eine Warnmeldung AL auszugeben. Dadurch wird nur in einer potenziell kritischen Situation eine Warnmeldung AL an die übergeordnete Gefahrenmeldestelle Z ausgegeben und somit der Busverkehr über die Busleitung BUS minimiert.

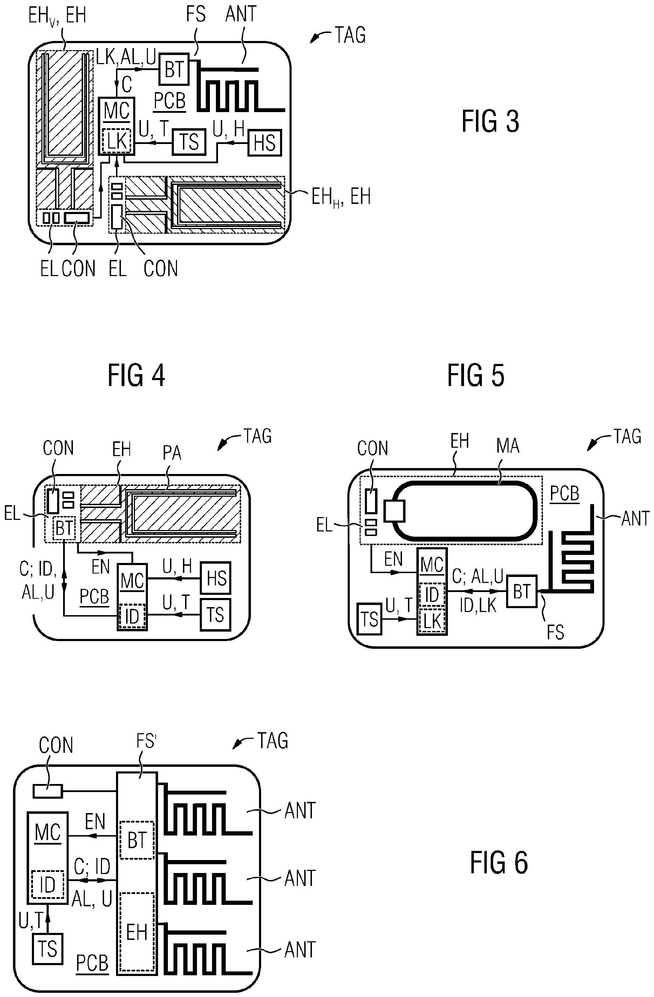

FIG 3 zeigt den schematischen Aufbau eines beispielhaften passiven Funketiketts TAG mit zwei orthogonal zueinander angeordneten Energy-Harvesting-Einheiten EH_{V}, EH_{H} (Rectennen) gemäss der Erfindung. Deren Dipole bzw. Antennenarme sind orthogonal zueinander angeordnet, so dass durch die vektorielle Überlagerung eine weniger genaue Ausrichtung des passiven Funketiketts TAG auf den Leckwellenleiter SK erforderlich ist. So ist im Beispiel der FIG 3 der Empfang von elektromagnetischer Energie EN durch die linke Energy-Harvesting-Einheit EHv maximal, wenn die E-Feldkomponente der vom Leckwellenleiter SK ausgesandten Funkwelle in der Bildebene des FIG 3 von links nach rechts oder umkehrt durch die beiden Dipolarme hindurch verläuft. In entsprechender Weise ist der Empfang von elektromagnetischer Energie EN durch die untere Energy-Harvesting-Einheit EH_{H} maximal, wenn die E-Feldkomponente der vom Leckwellenleiter SK ausgesandten Funkwelle in der Bildebene des FIG 3 von oben nach unten oder umkehrt durch die beiden Dipolarme hindurch verläuft.

Dadurch ist mit dieser Anordnung auch für dazwischenliegend verlaufende E-Feldkomponenten ein maximaler Empfang von elektromagnetischer Feldenergie EN vorteilhaft möglich.

Das in der FIG 3 gezeigte passive Funketikett TAG verfügt zusätzlich über einen Feuchtsensor HS zum Erfassen eines (relativen) Feuchtemesswerts H. Dadurch ist es möglich, z.B. eine Warnmeldung AL an die übergeordnete Gefahrenmeldestelle Z auszugeben, wenn ein erfasster Feuchtemesswert H einen Grenzwert überschreitet. Dadurch kann ein Leitungsleck einer Wasserleitung oder generell zu hohe Feuchtigkeit im Regallagersystem detektiert werden und z.B. einer Schimmelbildung vorgebeugt werden.

FIG 4 zeigt den schematischen Aufbau eines beispielhaften passiven Funketiketts TAG mit einer Funksende-/Empfangseinheit mit integrierter Energy-Harvesting-Einheit FS' gemäss der Erfindung. Der Vorteil liegt hier darin begründet, dass über eine und derselben Patch-Antenne PA sowohl elektromagnetische Feldenergie EN empfangen werden kann, als auch dass eine datentechnische Kommunikation zwischen dem passiven Funketikett TAG und der Gefahrenmeldestelle Z möglich ist. Somit ist ein Aussenden der Messwerte U durch das passive Funketikett TAG über den Leckwellenleiter SK an die Gefahrenmeldestelle Z und auf umgekehrtem Wege ein Aussenden eines HF-Kommunikationssignals C durch die Gefahrenmeldestelle Z über den Leckwellenleiter SK an das passive Funketikett TAG möglich.

FIG 5 zeigt den schematischen Aufbau eines beispielhaften passiven Funketiketts TAG mit einer eine magnetische Antenne MA umfassenden Energy-Harvesting-Einheit EH gemäss der Erfindung. In diesem Fall ist die magnetische Antenne MA zum Empfang der magnetischen Feldkomponente der vom Leckwellenleiter SK ausgesandten Funkwellen ausgebildet. Die datentechnische Kommunikation zwischen dem passiven Funketikett TAG und der Gefahrenmeldestelle Z erfolgt dagegen über eine (Bluetooth-)Funkschnittstelle.

FIG 6 zeigt den schematischen Aufbau eines beispielhaften passiven Funketiketts TAG mit einer Funksende-/Empfangseinheit mit integrierter Energy-Harvesting-Einheit FS' mit drei angeschlossenen Patch-Antennen ANT gemäss der Erfindung. Durch die Mehrzahl von Patch-Antennen ANT wird hier vorteilhaft die Empfangsleistung aus der elektromagnetischen Feldenergie gesteigert. Zugleich dienen die Patch-Antennen ANT als Teil der (Bluetooth- )Funkschnittstelle zur datentechnischen Kommunikation zwischen dem passiven Funketikett TAG und der Gefahrenmeldestelle Z.

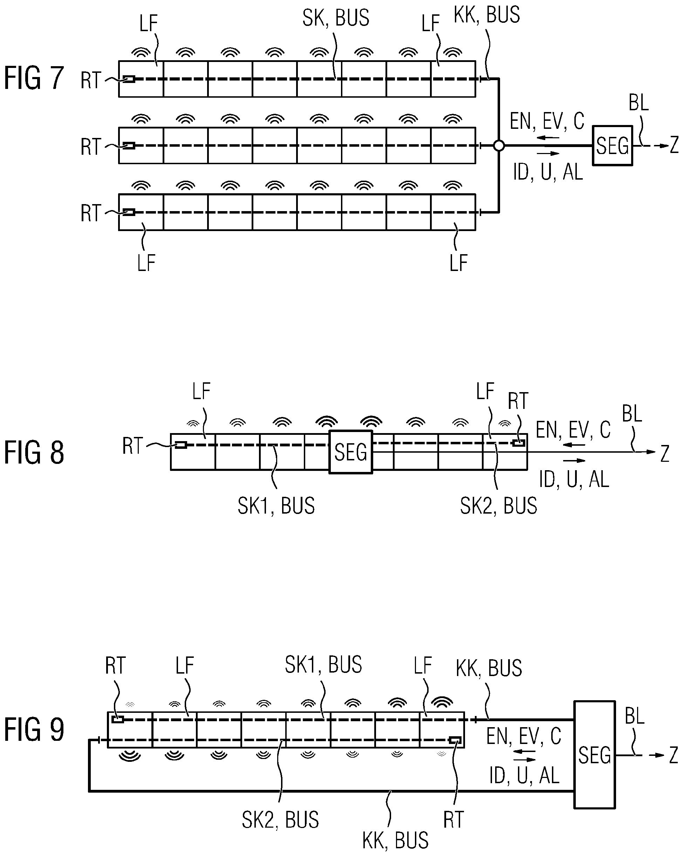

FIG 7 zeigt schematisch eine beispielhaft parallele Anordnung von elektrischen Leckwellenleitern SK mit gleichmässigem Abstrahlverhalten in einem Regallagersystem RL und mit einem gemeinsamen Sende-/Empfangsgerät SEG gemäss der Erfindung. Hierzu sind die Leckwellenleiter SK dazu ausgebildet, die Signalleistung zumindest des HF-Energieversorgungssignals EV gleichmässig über die gesamte Länge der Leckwellenleiter SK abzustrahlen. Die abgestrahlte elektromagnetische Feldenergie EN nimmt bei einem homogenen Leckwellenleiter SK degressiv mit dem Abstand vom Einspeisepunkt ab. Ein in etwa gleichmässiges Abstrahlverhalten eines Leckwellenleiters SK kann dagegen erreicht werden, wenn die Dichte der Öffnungen oder Schlitze am Mantelumfang des Leckwellenleiters SK mit dem Abstand vom Einspeisepunkt in kompensierender Weise zunimmt. Dadurch wird jedem passiven Funketikett TAG im Längserstreckungsbereich eines Leckwellenleiters SK bzw. Schlitzkabels vorteilhaft die gleiche elektromagnetische Feldenergie EN bereitgestellt. Zudem können gegebenenfalls unzulässig zu hohe Feldstärkepegel in der Nähe des Einspeisepunktes vorteilhaft vermieden werden.

Das im rechten Teil der FIG 7 gezeigte Sende-/Empfangsgerät SEG ist weiter dazu eingerichtet, die an den Leckwellenleitern SK als HF-Funksignale empfangenen Messwerte U und/oder Warnmeldungen AL sowie die eindeutigen Kennungen ID der passiven Funketiketten TAG an die Gefahrenmeldestelle Z weiterzuleiten.

FIG 8 zeigt schematisch ein Beispiel für einen elektrischen Leckwellenleiter SK in einem Regallagersystem RL mit mittiger Einspeisung eines HF-Energieversorgungs- und Kommunikationssignals EN, C über ein angeschlossenes Sende-/Empfangsgerät SEG gemäss der Erfindung. Mit SK1 und SK2 sind die beiden «Hälften» bzw. Teile des elektrischen Leckwellenleiters SK bezeichnet. Im Vergleich zur vorherigen FIG 7 weist der einfache (Standard-)Leckwellenleiter SK; SK1, SK2 über die gesamte Länge eine gleichmässige Dichte von Öffnungen oder Schlitze am Mantelumfang auf. Dadurch nimmt die Signalleistung des eingespeisten HF-Energieversorgungssignals EV und HF-Kommunikationssignal degressiv über die gesamte Länge der beiden Leckwellenleiter SK1, SK2 ab. Durch die mittige Einspeisung wird dieser nachteilige degressive Effekt abgemildert.

FIG 9 zeigt schematisch ein Beispiel einer antiparallelen Anordnung von zwei einfachen elektrischen (Standard-)Leckwellenleitern SK; SK1, SK2, angeschlossen an ein gemeinsames Sende-/Empfangsgerät SEG gemäss der Erfindung. Dadurch wird vorteilhaft erreicht, dass durch die additive Wirkung der abgestrahlten Teilsignalleistungen des HF-Energieversorgungs- und HF-Kommunikationssignals EV, C in etwa die gleiche Empfangsleistung für die in den Lagerfächern LF angeordneten passiven Funketiketten TAG zur Verfügung steht.

FIG 10 zeigt schematisch ein zweites Beispiel einer Überwachungsanlage BMA mit einem Leckwellenleiter SK zur elektrischen Energieversorgung sowie zur Kommunikation von passiven Funketiketten TAG mit einer Gefahrenmeldestelle Z gemäss der Erfindung. Im Unterschied zur vorherigen FIG 1 ist der mäanderförmig verlegte Leckwellenleiter SK nicht an ein alleiniges Sendegerät SG, sondern an ein kombiniertes Sende-/Empfangsgerät SEG angeschlossen.

Das Sende-/Empfangsgerät SEG ist weiter zum Empfangen der von den passiven Funketiketten TAG als HF-Funksignale gesendeten und in den Leckwellenleiter SK eingekoppelten Messwerte U und/oder Warnmeldungen AL angeschlossen. Es ist zudem dazu eingerichtet, die Messwerte U, insbesondere Umgebungstemperaturmesswerte, und/oder Warnmeldungen AL sowie die eindeutigen Kennungen ID der passiven Funketiketten TAG über eine Busleitung BL, wie z.B. über ein LAN-Kabel als IP-Datenverbindung IP3, an die Gefahrenmeldestelle Z weiterzuleiten. Letztere kann zudem dazu eingerichtet sein, die zuvor beschriebenen Messwerte U und Warnmeldungen AL sowie eindeutigen Kennungen ID von weiteren, nicht dargestellten Regalzeilen des Regallagersystems RL über weitere IP-Datenverbindungen IP3 zu empfangen.

Im vorliegenden Beispiel ist das Sende-/Empfangsgerät SEG weiter dazu eingerichtet, ein HF-Kommunikationssignals C in den angeschlossenen Leckwellenleiter SK einzuspeisen. Dabei sind die im Regallagersystem RL angeordneten passiven Funketiketten TAG dazu eingerichtet, basierend auf dem empfangenen HF-Kommunikationssignal C, insbesondere basierend auf einer über das HF-Kommunikationssignal C übertragenen Funketikettenadresse, die jeweils erfassten Messwerte U und/oder Warnmeldungen AL auszusenden.

Das gezeigte Sende-/Empfangsgerät SEG ist weiter dazu eingerichtet, ein HF-WLAN-Signal WIFI sowie ein HF-Mobilfunksignal eines Mobilfunknetzes, wie z.B. eines GSM-, UMTS-, LTE- oder 5G-Mobilfunknetzes, in den angeschlossenen Leckwellenleiter SK einzuspeisen und auf umgekehrtem Wege auszukoppeln. Es ist weiter dazu eingerichtet, die dann ausgekoppelten, mit dem HF-WLAN-Signal WIFI und/oder mit dem HF-Mobilfunksignal übertragenen Daten über eine Busleitung BL bzw. über eine IP-Datenverbindung IP4 an einen Telekommunikations-Netzknoten TK und somit in das Internet oder in ein Intranet weiterzuleiten. Schliesslich ist das gezeigte Sende-/Empfangsgerät SEG dazu eingerichtet, die vom Telekommunikations-Netzknoten TK empfangenen und über den angeschlossenen Leckwellenleiter SK weiterzuleitenden Daten zur Übertragung mit dem WLAN-Signal WIFI und dem HF-Mobilfunksignal in den Leckwellenleiter SK einzuspeisen.

Auf diese Weise ist vorteilhaft eine zuverlässige Datenübertragung zwischen automatischen Regalbediengeräten RBG und einer übergeordneten Logistiksteuerzentrale sowie zwischen Kommunikationsendgeräten MOB untereinander oder mit einer übergeordneten Leitstelle MS zu der erfindungsgemässen Überwachungsanlage BMA innerhalb des Regallagersystems RL möglich. Mit IP5 ist eine IP-Datenverbindung bezeichnet, hier in Form einer Funkverbindung FV.

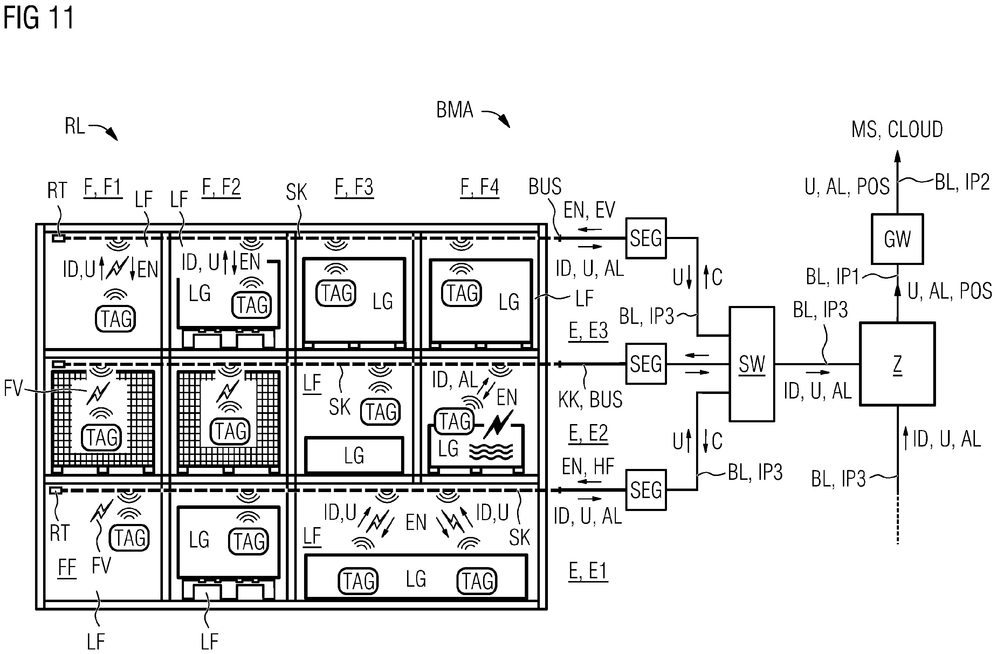

Schliesslich zeigt FIG 11 schematisch ein drittes Beispiel einer Überwachungsanlage BMA mit im Regallagersystem RL parallel verlegten, jeweils an ein gemeinsames Sende-/Empfangsgerät SEG angeschlossenen Leckwellenleitern SK gemäss der Erfindung.

Im Unterschied zur vorherigen FIG 10 ist jeweils ein Leckwellenleiter SK in einer Regalebene E verlegt und jeweils an ein Sende-/Empfangsgerät SEG angeschlossen. Die hier beispielhaften drei Sende-/Empfangsgeräte SEG sind über einen Router bzw. über einen Switch SW zur Datenübertragung mit der Gefahrenmeldestelle Z verbunden. Die separate Verlegung der Leckwellenleiter SK ist vorteilhaft für grössere Regallagersysteme RL.

Zusammenfassend betrifft die Erfindung ein Verfahren zur Überwachung eines Umgebungsparameters, insbesondere der Umgebungstemperatur, in einem Regallagersystem RL mit einer Vielzahl von Lagerfächern LF zur Einlagerung von Lagergut LG. Es wird ein elektrischer Leckwellenleiter SK wie ein Schlitzkabel entlang der Lagerfächer LF verlegt. Es werden passive Funketiketten TAG mit jeweils einem Sensor TS, HS zur Erfassung eines jeweiligen Umgebungsparameters in den Lagerfächern LF zur Überwachung von eingelagertem Lagergut LG angebracht. Es wird ein HF-Energieversorgungssignal EV in den Leckwellenleiter SK eingespeist, wobei ein Teil der eingespeisten Signalleistung in Form elektromagnetischer Feldenergie EN zum Lagergut LG hin abgestrahlt wird. Ein Teil der vom Leckwellenleiter SK abgestrahlten elektromagnetischen Feldenergie EN wird von den passiven Funketiketten TAG empfangen und zur elektrischen Eigenversorgung bereitgestellt, um ein wiederholtes Senden von Messwerten U; T, H zu einem erfassten Umgebungsparameter und/oder um ein sofortiges Senden einer Warnmeldung AL bei Überschreiten eines Grenzwertes an eine Gefahrenmeldestelle Z zu ermöglichen. Die Erfindung betrifft zudem eine Überwachungsanlage BMA und eine geeignete Verwendung.

### Bezugszeichenliste

- AL: Warnmeldung, Alarmmeldung
- ANT: Antenne, Patch-Antenne, Bluetooth-Antenne
- AP: drahtloser Zugangspunkt, Accesspoint, Gateway, Edge-Device
- BL: Kommunikationsbusleitung, zweite Busleitung, Ethernet-Bus
- BMA: Überwachungsanlage, Brandmeldeanlage
- BT: Kommunikationschip, Bluetooth-Controller
- FS: Funksende-/Empfangseinheit, Bluetooth-Sende-/Empfangseinheit
- FS': Funksende-/Empfangseinheit mit integrierter Energy-Harvesting-Einheit
- BUS: Busleitung, erste Busleitung
- C: Kommunikationssignal, HF-Kommunikationssignal, Adressierungssignal
- CON: Kondensator, elektrischer Energiespeicher
- COUD: Cloud-Infrastruktur
- E, E1-E3: Ebene, Regalebene
- EG: Empfangsgerät, Empfangseinheit
- EH, EH_{V}, EH_{H}: Energy-Harvester, Energy-Harvesting-Einheit
- EL: elektrische und elektronische Komponenten
- EN: elektromagnetische Feldenergie, elektrische Energie
- F, F1-F4: Feld, Regalfeld, Säule, Reihe
- FF: nicht belegtes Lagerfach
- FV: Funkverbindung, Bluetooth-Funkverbindung
- FS: Funkschnittstelle
- GW: Gateway
- EV: Energieversorgungssignal, HF-Energieversorgungssignal
- HS: Feuchtigkeitssensor
- ID: Tag-Kennung, ID
- IND: induktiv-gekoppelte Luftschnittstelle
- IP1-IP5: IP-Datenverbindung
- KK: Koaxialkabel
- L: elektrische Empfangsleistung
- LED: elektrisches Leuchtmittel, Leuchtdiode
- LF: Lagerfach, Lagerplatz
- LG: Lagergut
- LK: Lagerfachkennung
- MA: magnetische Antenne, Antennenloop
- MC: Mikrocontroller, elektronische Steuereinheit
- MOB: Kommunikationsendgerät, Smartphone, Tablet
- MS: übergeordnete Leitstelle, Management Station
- PA: Rectenne, Patchantenne
- PCB: Schaltungsträger, Leiterplatte
- POS: Lagerfachposition im Regallagersystem
- RBG: Regalbediengerät
- RL: Regallagersystem, Hochregallager
- RT: Abschlusswiderstand, Wellenwiderstand
- SEG: Sende-/Empfangsgerät
- SG: Sendegerät
- SK, SK1, SK2: elektrischer Leckwellenleiter, Schlitzkabel
- SW: Router, Switch
- T: Temperaturmesswert, Umgebungstemperaturmesswert
- TAG: passive Funketikett, Tag
- TK: Netzknoten, Telekommunikation-Netzknoten
- TS: Temperatursensor
- U: Messwert, Umgebungsparametermesswert
- WIFI: HF-WLAN-Signal, HF-Signal eines Mobilfunknetzes
- Z: Gefahrenmeldestelle, Zentrale

## Patentansprüche

1. Verfahren zur Überwachung eines Umgebungsparameters in einem Regallagersystem (RL), insbesondere zur Überwachung einer Umgebungstemperatur, wobei das Regallagersystem (RL) eine Vielzahl von Lagerfächern (LF) zur Einlagerung von Lagergut (LG) umfasst,
- wobei zumindest ein elektrischer Leckwellenleiter (SK), insbesondere ein Schlitzkabel, entlang und insbesondere innerhalb der Lagerfächer (LF) verlegt wird,
- wobei in den Lagerfächern (LF) eine Vielzahl von passiven Funketiketten (TAG) mit jeweils einem Sensor (TS, HS) zur Erfassung eines jeweiligen Umgebungsparameters zur Überwachung von eingelagertem Lagergut (LG) angebracht wird,
- wobei ein HF-Energieversorgungssignal (EV) in den jeweiligen Leckwellenleiter (SK) eingespeist wird, wobei ein Teil einer eingespeisten Signalleistung in Form von elektromagnetischer Feldenergie (EN) zum Lagergut (LG) hin abgestrahlt wird, und
- wobei ein Teil der vom jeweiligen Leckwellenleiter (SK) abgestrahlten elektromagnetischen Feldenergie von den passiven Funketiketten (TAG) empfangen und zur elektrischen Eigenversorgung bereitgestellt wird, um ein wiederholtes Senden von Messwerten (U; T, H) zu einem jeweiligen erfassten Umgebungsparameter an eine Gefahrenmeldestelle (Z) zu ermöglichen und/oder um ein sofortiges Senden einer Warnmeldung (AL) bei einer unzulässigen Abweichung eines erfassten Messwerts (U; T, H) von einem jeweiligen Grenzwert an eine Gefahrenmeldestelle (Z) zu ermöglichen.

2. Verfahren nach Anspruch 1, wobei die von den passiven Funketiketten (TAG) gesendeten Messwerte (U; T, H) und/oder Warnmeldungen (AL) auf umgekehrtem Wege durch Einkopplung in den elektrischen Leckwellenleiter (SK) an die Gefahrenmeldestelle (Z) weitergeleitet werden, wobei die Gefahrenmeldestelle (Z) direkt oder mittelbar an den Leckwellenleiter (SK) zum Empfangen der Messwerte (U; T, H) und/oder Warnmeldungen (AL) angeschlossen ist.

3. Verfahren nach Anspruch 2, wobei ein HF-Kommunikationssignal (C) in den elektrischen Leckwellenleiter (SK) eingespeist wird, wobei ein Teil der eingespeisten Signalleistung des HF-Kommunikationssignals (C) in Form von elektromagnetischer Feldenergie zum Lagergut (LG) hin abgestrahlt wird, wobei darauf basierend, insbesondere basierend auf einer durch das HF-Kommunikationssignal (C) übertragenen Funketikettenadresse oder übertragenen eindeutigen Kennung (ID), ein jeweiliges passives Funketikett (TAG) zum Senden eines Messwerts (U; T, H) zu einem jeweiligen erfassten Umgebungsparameter aufgefordert wird und wobei der jeweils als HF-Funksignal gesendete Messwert (U; T, H) auf umgekehrtem Wege in den Leckwellenleiter (SK) eingekoppelt und an die Gefahrenmeldestelle (Z) weitergeleitet wird.

4. Verfahren nach Anspruch 1, wobei die von den passiven Funketiketten (TAG) gesendeten Messwerte (U; T, H) und/oder Warnmeldungen (AL) über ein im Bereich des Regallagersystems (RL) angeordnetes Funknetzwerk, insbesondere über ein verteiltes Mesh-Funknetzwerk mit einer Mehrzahl von drahtlosen Zugangspunkten (AP), direkt oder mittelbar an die Gefahrenmeldestelle (Z) weitergeleitet werden.

5. Verfahren nach einem der vorherigen Ansprüche, wobei die passiven Funketiketten (TAG) auf drahtlosem Wege (BT) mit einer jeweiligen Lagerfachkennung (LK) versehen werden, vorzugsweise mittels eines mobilen Kommunikationsendgeräts (MOB), wobei die jeweilige Lagerfachkennung (LK) ein Lagerfach (LF) kennzeichnet, in dem das jeweilige passive Funketikett (TAG) angebracht wird, und wobei ein dann von einem jeweiligen passiven Funketikett (TAG) zusammen mit dessen Lagerfachkennung (LK) gesendeter Messwert (U; T, H) und/oder eine zusammen mit dessen Lagerfachkennung (LK) gesendete Warnmeldung (AL) zur Bestimmung der Position (POS) des Lagerfachs (LF) im Regallagersystem (RL) verwendet wird.

6. Verfahren nach einem der vorherigen Ansprüche, wobei ein Messwert (U; T, H) zu einem Umgebungsparameter ein Umgebungstemperaturwert (T) und/oder ein Luftfeuchtigkeitswert (H) und/oder ein Gaskonzentrationswert eines Brandgases ist, wobei das Brandgas zumindest einen Anteil von Kohlenstoffdioxid, Kohlenstoffmonoxid, Wasserstoff, Ammoniak, Schwefelwasserstoff und/oder Stickstoffmonoxid aufweist.

7. Anlage (BMA) zur Überwachung eines Umgebungsparameters in einem Regallagersystem (RL), insbesondere zur Überwachung einer Umgebungstemperatur, wobei das Regallagersystem (RL) eine Vielzahl von Lagerfächern (LF) zur Einlagerung von Lagergut (LG) umfasst, wobei die Anlage (BMA) weiter aufweist,
- zumindest einen entlang und insbesondere innerhalb der Lagerfächer (LF) verlegten elektrischen Leckwellenleiter (SK), insbesondere ein Schlitzkabel,
- ein an den jeweiligen Leckwellenleiter (SK) angeschlossenes Sendegerät (SG, SEG) zum Einspeisen eines HF-Energieversorgungssignals (EV), wobei der jeweilige Leckwellenleiter (SK) zum verteilten Abstrahlen eines Teils der eingespeisten Signalleistung des HF-Energieversorgungssignals (EV) in Form von elektromagnetischer Feldenergie (EN) entlang des jeweiligen Leckwellenleiters (SK) ausgebildet ist,
- passive Funketiketten (TAG) mit jeweils einem Sensor (TS, HS) zur Erfassung eines jeweiligen Umgebungsparameters, wobei die passiven Funketiketten (TAG) in oder an den Lagerfächern (LF) zur Überwachung von dort eingelagertem Lagergut (LG) angebracht sind, wobei die passiven Funketiketten (TAG) jeweils eine Energy-Harvesting-Einheit (EH) zum Empfangen eines Teils der abgestrahlten elektromagnetischen Feldenergie (EN) für die elektrische Eigenversorgung aufweisen, um ein wiederholtes Senden von Messwerten (U; T, H) zu einem jeweiligen erfassten Umgebungsparameterwert zu ermöglichen und/oder um ein sofortiges Senden einer Warnmeldung (AL) bei einer unzulässigen Abweichung eines erfassten Messwerts (U; T, H) von einem jeweiligen Grenzwert zu ermöglichen, und
- eine Gefahrenmeldestelle (Z) eingerichtet zum direkten oder mittelbaren Empfang der von der Vielzahl von passiven Funketiketten (TAG) gesendeten Messwerte (U; T, H) und/oder Warnmeldungen (AL).

8. Anlage (BMA) nach Anspruch 7, wobei ein Empfangsgerät (EG, SEG) an dem jeweiligen elektrischen Leckwellenleiter (SK) zum Empfangen der von den passiven Funketiketten (TAG) als HF-Funksignale gesendeten und in den jeweiligen Leckwellenleiter (SK) eingekoppelten Messwerte (U; T, H) und/oder Warnmeldungen (AL) angeschlossen ist und wobei das Empfangsgerät (EG, SEG) dazu eingerichtet ist, die am jeweiligen Leckwellenleiter (SK) als HF-Funksignale empfangenen Messwerte (U; T, H) und/oder Warnmeldungen (AL) an die Gefahrenmeldestelle (Z) weiterzuleiten.

9. Anlage (BMA) nach Anspruch 8,
- wobei der jeweilige elektrische Leckwellenleiter (SK) an das Sendegerät (SG, SEG) oder an ein weiteres Sendegerät zum Einspeisen eines HF-Kommunikationssignals (C) angeschlossen ist und wobei der jeweilige Leckwellenleiter (SK) zum verteilten Abstrahlen eines Teils der eingespeisten Signalleistung des HF-Kommunikationssignals (C) in Form von elektromagnetischer Feldenergie entlang des Leckwellenleiters (SK) ausgebildet ist, und
- wobei die passiven Funketiketten (TAG) dazu eingerichtet sind, basierend auf dem empfangenen HF-Kommunikationssignal (C), insbesondere basierend auf einer über das HF-Kommunikationssignal (C) übertragenen Funketikettenadresse, die jeweils erfassten Messwerte (U; T, H) und/oder Warnmeldungen (AL) zu senden.

10. Anlage (BMA) nach Anspruch 9,
- wobei der zumindest eine elektrische Leckwellenleiter (SK) an das Sendegerät (SG, SEG) oder an das weitere Sendegerät angeschlossen ist, jeweils dazu eingerichtet, ein HF-WLAN-Signal (WIFI) und/oder ein HF-Mobilfunksignal eines Mobilfunknetzes, wie z.B. eines GSM-, UMTS-, LTE- oder 5G-Mobilfunknetzes, in den jeweiligen Leckwellenleiter (SK) einzuspeisen und auf umgekehrtem Wege auszukoppeln, und
- wobei das Sendegerät (SG, SEG) oder das weitere Sendegerät dazu eingerichtet ist, die ausgekoppelten, mit dem HF-WLAN-Signal (WIFI) und/oder HF-Mobilfunksignal übertragenen Daten zumindest mittelbar über eine Busleitung (BL, IP5) oder über drahtlose Datenverbindung an einen Telekommunikations-Netzknoten (TK) weiterzuleiten und wobei das Sendegerät (SG, SEG) oder das weitere Sendegerät dazu eingerichtet ist, die vom Telekommunikations-Netzknoten (TK) empfangenen und über den Leckwellenleiter (SK) weiterzuleitenden Daten zur Übertragung mit dem WLAN-Signal (WIFI) und/oder HF-Mobilfunksignal in den Leckwellenleiter (SK) einzuspeisen.

11. Anlage (BMA) nach einem der Ansprüche 7 bis 10, wobei die entlang des elektrischen Leckwellenleiters (SK) abgestrahlte, vom HF-Energieversorgungssignal (EV) stammende elektromagnetische Feldenergie in einem Abstand von 1 Meter vom Leckwellenleiter eine elektrische Leistungsdichte mit einem Mindestwert von 0.01 Watt/m², insbesondere mit einem Mindestwert 0,1 Watt/m² und vorzugsweise mit einem Mindestwert von 1 Watt/m² aufweist.

12. Anlage (BMA) nach einem der Ansprüche 7 bis 11, wobei die passiven Funketiketten (TAG) jeweils einen elektrischen Energiespeicher (CON), insbesondere einen Kondensator, zur Pufferung der von der zumindest einen Energy-Harvesting-Einheit (EH; EH_{V}, EH_{H}) in elektrische Energie umgewandelten empfangenen elektromagnetischen Feldenergie umfassen.

13. Anlage (BMA) nach einem der Ansprüche 7 bis 12, wobei der elektrische Leckwellenleiter (SK) dazu ausgebildet ist, die eingespeiste Signalleistung, zumindest des HF-Energieversorgungssignals (EV) gleichmässig über die gesamte Länge des Leckwellenleiters (SK) abzustrahlen.

14. Anlage (BMA) nach einem der Ansprüche 7 bis 13, wobei der elektrische Leckwellenleiter, insbesondere das Schlitzkabel, zur elektromagnetisch bevorzugten Abstrahlung in einem lizenzfreien Frequenzband ausgebildet ist, insbesondere in einem 2.4 GHz-Frequenzband, in einem 433 MHz-Frequenzband, in einem 860 MHz Frequenzband, in einem 900 MHz Frequenzband, in einem 5 GHz-Frequenzband oder in einem 6 GHz-Frequenzband.

15. Verwendung von entlang eines elektrischen Leckwellenleiters (SK), insbesondere eines Schlitzkabels, abgestrahlter elektromagnetischer Feldenergie (EN) zur elektrischen Eigenversorgung einer Vielzahl von passiven Funketiketten (TAG), wobei der elektrische Leckwellenleiter (SK) entlang von Lagerfächern (LF) eines Regallagersystems (RL) verlegt ist, und wobei die passiven Funketiketten (TAG) in den Lagerfächern (LF) zur Überwachung zumindest eines Umgebungsparameters, insbesondere der Umgebungstemperatur, von eingelagertem Lagergut (LG) angebracht sind und jeweils eine Energy-Harvesting-Einheit (EH) umfassen, wobei die jeweilige Energy-Harvesting-Einheit (EH) auf den Empfang der vom Leckwellenleiter (SK) abgestrahlten elektromagnetischen Feldenergie (EN) zur elektrischen Eigenversorgung der passiven Funketiketten (TAG) abgestimmt ist, um ein wiederholtes Senden von Messwerten (U; T, H) zu einem jeweiligen erfassten Umgebungsparameterwert an eine Gefahrenmeldestelle (Z) zu ermöglichen und/oder um ein sofortiges Senden einer Warnmeldung (AL) bei einer unzulässigen Abweichung eines erfassten Messwerts (U; T, H) von einem jeweiligen Grenzwert an eine Gefahrenmeldestelle (Z) zu ermöglichen.
